# EUROPEAN PATENT APPLICATION

(11) **EP 4 590 024 A1**
(43) Date of publication of application: **23.07.2025**
(21) Application number: 23874340.5
(22) Date of filing: 08.10.2023
(51) Int. Cl.: H04W 36/18

(54) **COMMUNICATION METHOD, APPARATUS, AND SYSTEM**

(30) Priority: 08.10.2022 CN 202211222296
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); LI, He, Shenzhen, Guangdong 518129 (CN)
(74) Representative: Goddar, Heinz J.
(86) International application number: PCT/CN2023/123395
(87) International publication number: WO 2024/074148

(57) **Abstract**

This application pertains to the field of communication technologies, and provides a communication method, apparatus, and system, to improve PCS connection switching efficiency. In the method, when a remote device has established a first relay connection to a first relay device by using a first PCS connection mechanism, for example, a user plane based mechanism or a control plane based mechanism, if the remote device expects to switch the relay connection, the remote device may establish a second relay connection to a second relay device by preferentially reusing a connection mechanism used before relay connection switching, namely, the first PCS connection mechanism, to improve PCS connection switching efficiency, reduce a switching delay, and ensure continuity of a first service obtained by the remote device from a network.

## Description

This application claims priority to Chinese Patent Application No. 202211222296.2, filed with the China National Intellectual Property Administration on October 8, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In a communication system, if a specific user equipment (user equipment, UE) 1 is located outside network coverage, signal strength of communication between the UE 1 and a radio access network (radio access network, RAN) device is weak, or another UE is needed to assist in data transmission, the UE 1 may obtain a service from a network side with assistance of the another UE (for example, a UE 2). For example, the UE 1 establishes a proximity-based services communication 5 (Proximity-based services communication 5, PC5) connection to the UE 2 over an air interface, to communicate with the network side through the PC5 connection, and obtain the service provided by the network. The UE 1 may be considered as a remote (remote) UE. The UE 2 may be considered as a relay UE. The communication between the remote UE and the network side through the relay UE may be considered as ProSe relay communication.

The remote UE may establish the PC5 connection to the relay UE by using a user plane (user plane, UP) based mechanism or a control plane (control plane, CP) based mechanism. The UP-based mechanism is a mechanism for obtaining a relay connection key through a user plane of the network, and the CP-based mechanism is a mechanism for obtaining a relay connection key through a control plane of the network. However, the remote UE may switch the PC5 connection, for example, establish a PC5 connection to a new relay UE. In this case, how to improve switching efficiency is a hot topic in current research.

### SUMMARY

Embodiments of this application provide a communication method, apparatus, and system, to improve PC5 connection switching efficiency.

To achieve the foregoing objective, the following technical solutions are applied in this application.

According to a first aspect, a communication method is provided. The method includes: A remote device determines priority information of a first relay service identifier when a first relay connection needs to be switched, to establish a second relay connection to a second relay device based on the priority information of the first relay service identifier and by using a first PC5 connection mechanism. The priority information of the first relay service identifier indicates that the first PC5 connection mechanism indicated by the first relay service identifier needs to be preferentially used. The first PC5 connection mechanism is a mechanism used by the remote device to establish the first relay connection to a first relay device. The first relay connection is used by the remote device to obtain a first service of a network through the first relay device. The second relay connection is used by the remote device to obtain the first service of the network through the second relay device.

It can be learned from the method according to the first aspect that, when the remote device has established the first relay connection to the first relay device by using the first PC5 connection mechanism, for example, a user plane based mechanism or a control plane based mechanism, if the remote device expects to switch the relay connection, the remote device may establish the second relay connection to the second relay device by preferentially reusing a connection mechanism used before relay connection switching, namely, the first PC5 connection mechanism, to improve PC5 connection switching efficiency, reduce a switching delay, and ensure continuity of the first service obtained by the remote device from the network.

In a possible design solution, that the remote device establishes a second relay connection to a second relay device based on the priority information of the first relay service identifier and by using a first PC5 connection mechanism includes: The remote device determines, based on the priority information of the first relay service identifier, to establish the relay connection to the second relay device by using the first PC5 connection mechanism, to be specific, discovers the second relay device that supports the first PC5 connection mechanism, to ensure that the remote device can establish the second relay connection to the second relay device by using the first PC5 connection mechanism.

Optionally, that the remote device determines, based on the priority information of the first relay service identifier, to establish the relay connection to the second relay device by using the first PC5 connection mechanism includes: The remote device broadcasts the first relay service identifier, to receive a relay service identifier of at least one relay device, where the relay service identifier of the at least one relay device includes a relay service identifier indicating the first PC5 connection mechanism. In this way, the remote device determines, based on the priority information of the first relay service identifier, to establish the relay connection to the second relay device in the at least one relay device by using the first PC5 connection mechanism. The second relay device is a relay device corresponding to the relay service identifier indicating the first PC5 connection mechanism. It can be learned that the remote device may actively broadcast the relay service identifier to discover a relay device, for example, the second relay device, that supports the first PC5 connection mechanism, to increase a relay discovery probability.

Alternatively, optionally, that the remote device determines, based on the priority information of the first relay service identifier, to establish the relay connection to the second relay device by using the first PC5 connection mechanism includes: The remote device receives a relay service identifier of at least one relay device, where the relay service identifier of the at least one relay device includes a relay service identifier indicating the first PC5 connection mechanism. In this way, the remote device determines, based on the priority information of the first relay service identifier, to establish the relay connection to the second relay device in the at least one relay device by using the first PC5 connection mechanism. The second relay device is a relay device corresponding to the relay service identifier indicating the first PC5 connection mechanism. It can be learned that the remote device may alternatively passively receive the relay service identifier to discover a relay device, for example, the second relay device, that supports the first PC5 connection mechanism, to avoid communication overheads caused by actively broadcasting the relay service identifier.

In a possible design solution, that a remote device determines priority information of a first relay service identifier includes: The remote device determines the priority information of the first relay service identifier based on first indication information from a policy control network element, where the first indication information indicates to establish the relay connection by preferentially using a connection mechanism used before relay connection switching. In other words, in addition to establishing the relay connection by preferentially using, by default, the connection mechanism used before the relay connection switching, the remote device may alternatively flexibly determine, based on the indication of the policy control network element, whether to establish the relay connection by preferentially using the connection mechanism used before the relay connection switching, to meet relay switching requirements of different services.

In a possible design solution, that a remote device determines priority information of a first relay service identifier includes: The remote device determines the priority information of the first relay service identifier based on second indication information from a relay server, where the second indication information indicates to establish the relay connection by preferentially using the first PC5 connection mechanism. In other words, in addition to establishing the relay connection by preferentially using, by default, the connection mechanism used before the relay connection switching, the remote device may alternatively flexibly determine, based on the indication of the relay server, whether to establish the relay connection by preferentially using the first PC5 connection mechanism, to achieve applicability to different switching scenarios.

Optionally, the method according to the first aspect may further include: The remote device sends a relay reselection request message to the relay server, where the relay reselection request message indicates that a connection mechanism used before relay connection switching is the first PC5 connection mechanism. The remote device receives a relay reselection response message returned by the relay server for the relay reselection request message, where the relay reselection response message carries the second indication information. In other words, the remote device may obtain the indication of the relay server by reusing a relay reselection procedure, to reduce implementation difficulty. Alternatively, the remote device may obtain the indication of the relay server through a newly defined procedure. This is not limited.

In a possible design solution, that a remote device determines priority information of a first relay service identifier includes: The remote device determines the priority information of the first relay service identifier based on a first access mechanism. The first access mechanism is a mechanism used by the remote device to access the network through the first relay device. For example, the first access mechanism may be either of the following mechanisms: a layer-2 access mechanism and a layer-3 with non-protocol access mechanism. It may be understood that when the remote device accesses the network by using the layer-2 access mechanism or the layer-3 with non-protocol access mechanism, the remote device may establish a session between the remote device and the network, to obtain the first service of the network. Based on this, if the remote device implements fast switching by preferentially reusing the connection mechanism used before the relay connection switching, the remote device may further continue to reuse the session before the session becomes invalid, to continue to obtain the first service of the network. This can ensure service continuity.

In a possible design solution, the priority information of the first relay service identifier further indicates that a first access mechanism in at least one access mechanism for network access needs to be preferentially used, and the first access mechanism is a mechanism used by the remote device to access the network through the first relay device. That the remote device establishes a second relay connection to a second relay device based on the priority information of the first relay service identifier and by using a first PC5 connection mechanism includes: The remote device determines, based on the priority information of the first relay service identifier, to establish the relay connection to the second relay device by using the first PC5 connection mechanism and access the network by using the first access mechanism. In this way, the remote device may establish the second relay connection to the second relay device by using the first PC5 connection mechanism, and access the network through the second relay device by using the first access mechanism.

It can be learned that when the remote device has accessed the network by using the first access mechanism, if the remote device expects to switch the relay connection, the remote device may continue to access the network by preferentially reusing an access mechanism used before the relay connection switching, namely, the first access mechanism, to further ensure the service continuity.

Optionally, that the remote device determines, based on the priority information of the first relay service identifier, to establish the relay connection to the second relay device by using the first PC5 connection mechanism and access the network by using the first access mechanism includes: The remote device broadcasts the first relay service identifier, to receive a relay service identifier of at least one relay device. The relay service identifier of the at least one relay device includes a relay service identifier indicating the first PC5 connection mechanism and the first access mechanism. In this way, the remote device determines, based on the priority information of the first relay service identifier, to establish the relay connection to the second relay device in the at least one relay device by using the first PC5 connection mechanism and access the network by using the first access mechanism. The second relay device is a relay device corresponding to the relay service identifier indicating the first PC5 connection mechanism and the first access mechanism. It can be learned that the remote device may actively broadcast the relay service identifier to discover a relay device, for example, the second relay device, that supports the first PC5 connection mechanism and the first access mechanism, to increase a relay discovery probability.

Optionally, that the remote device determines, based on the priority information of the first relay service identifier, to establish the relay connection to the second relay device by using the first PC5 connection mechanism and access the network by using the first access mechanism includes: The remote device receives a relay service identifier of at least one relay device. The relay service identifier of the at least one relay device includes a relay service identifier indicating the first PC5 connection mechanism and the first access mechanism. In this way, the remote device determines, based on the priority information of the first relay service identifier, to establish the relay connection to the second relay device in the at least one relay device by using the first PC5 connection mechanism and access the network by using the first access mechanism. The second relay device is a relay device corresponding to the relay service identifier indicating the first PC5 connection mechanism and the first access mechanism. It can be learned that the remote device may alternatively passively receive the relay service identifier to discover a relay device, for example, the second relay device, that supports the first PC5 connection mechanism and the first access mechanism, to avoid communication overheads caused by actively broadcasting the relay service identifier.

Optionally, that a remote device determines priority information of a first relay service identifier includes: The remote device determines the priority information of the first relay service identifier based on third indication information from a policy control network element. The third indication information indicates to establish the relay connection by preferentially using a connection mechanism used before relay connection switching, and access the network by preferentially using an access mechanism used before the relay connection switching. In other words, the remote device may flexibly determine, based on the indication of the policy control network element, whether to establish the relay connection by preferentially using the connection mechanism used before the relay connection switching and whether to access the network by preferentially using the access mechanism used before the relay connection switching, to meet relay switching requirements of different services.

Optionally, that a remote device determines priority information of a first relay service identifier includes: The remote device determines the priority information of the first relay service identifier based on fourth indication information from a relay server. The fourth indication information indicates to establish the relay connection by preferentially using the first PC5 connection mechanism, and access the network by preferentially using the first access mechanism. In other words, in addition to establishing the relay connection by preferentially using, by default, the connection mechanism used before the relay connection switching, the remote device may alternatively flexibly determine, based on the indication of the relay server, whether to establish the relay connection by preferentially using the first PC5 connection mechanism and whether to establish and access the network by preferentially using an access mechanism used before the relay connection switching, to achieve applicability to different switching scenarios.

Further, the method according to the first aspect may include: The remote device sends a relay reselection request message to the relay server. The relay reselection request message indicates that a connection mechanism used before relay connection switching is the first PC5 connection mechanism, and an access mechanism used before the relay connection switching is the first access mechanism. The remote device receives a relay reselection response message returned by the relay server for the relay reselection request message, where the relay reselection response message carries the fourth indication information. In other words, the remote device may obtain the indication of the relay server by reusing a relay reselection procedure, to reduce implementation difficulty. Alternatively, the remote device may obtain the indication of the relay server through a newly defined procedure. This is not limited.

Optionally, that a remote device determines priority information of a first relay service identifier includes: The remote device determines the priority information of the first relay service identifier based on the first access mechanism. For example, the first access mechanism is either of the following mechanisms: a layer-2 access mechanism and a layer-3 with non-protocol access mechanism. It may be understood that when the remote device accesses the network by using the layer-2 access mechanism or the layer-3 with non-protocol access mechanism, the remote device may establish a session between the remote device and the network, to obtain the first service of the network. Based on this, if the remote device implements fast switching by preferentially reusing the connection mechanism used before the relay connection switching, the remote device may further reuse the session, to continue to obtain the first service of the network. This can ensure the service continuity.

Optionally, the at least one access mechanism includes at least one of the following: the layer-2 access mechanism, a layer-3 with protocol access mechanism, or the layer-3 with non-protocol access mechanism, so that the remote device can flexibly access the network.

In a possible design solution, the first PC5 connection mechanism includes a mechanism for obtaining a relay connection key through a user plane of the network or a mechanism for obtaining a relay connection key through a control plane of the network, to ensure PC5 connection security.

According to a second aspect, a communication method is provided. The method includes: A remote device determines a first relay service identifier according to a relay switching policy when a first relay connection needs to be switched, to establish a second relay connection to a second relay device based on the first relay service identifier and by using a first PC5 connection mechanism. The relay switching policy is establishing a relay connection by using a PC5 connection mechanism used before relay connection switching, the first relay service identifier is for determining the first PC5 connection mechanism, the first PC5 connection mechanism is a mechanism used by the remote device to establish the first relay connection to a first relay device, and the first relay connection is used by the remote device to obtain a first service of a network through the first relay device. The second relay connection is used by the remote device to obtain the first service of the network through the second relay device.

It can be learned from the method according to the second aspect that, when the remote device has established the first relay connection to the first relay device by using the first PC5 connection mechanism, for example, a user plane based mechanism or a control plane based mechanism, if the remote device expects to switch the relay connection, the remote device may establish the second relay connection to the second relay device by continuing to reuse the connection mechanism used before the relay connection switching, namely, the first PC5 connection mechanism, to improve PC5 connection switching efficiency, reduce a switching delay, and ensure continuity of the first service obtained by the remote device from the network.

In a possible design solution, that the remote device establishes a second relay connection to a second relay device based on the first relay service identifier and by using a first PC5 connection mechanism includes: The remote device determines, based on the first relay service identifier, to establish the relay connection to the second relay device by using the first PC5 connection mechanism, to be specific, discovers the second relay device that supports the first PC5 connection mechanism, to ensure that the remote device can establish the second relay connection to the second relay device by using the first PC5 connection mechanism.

Optionally, that the remote device determines, based on the first relay service identifier, to establish the relay connection to the second relay device by using the first PC5 connection mechanism includes: The remote device broadcasts the first relay service identifier, to receive a relay service identifier of at least one relay device. The relay service identifier of the at least one relay device includes a relay service identifier indicating the first PC5 connection mechanism. The remote device determines, based on the first relay service identifier, to establish the relay connection to the second relay device in the at least one relay device. The second relay device is a relay device corresponding to the relay service identifier indicating the first PC5 connection mechanism.

Optionally, that the remote device determines, based on the first relay service identifier, to establish the relay connection to the second relay device by using the first PC5 connection mechanism includes: The remote device receives a relay service identifier of at least one relay device. The relay service identifier of the at least one relay device includes a relay service identifier indicating the first PC5 connection mechanism. The remote device determines, based on the first relay service identifier, to establish the relay connection to the second relay device in the at least one relay device. The second relay device is a relay device corresponding to the relay service identifier indicating the first PC5 connection mechanism.

In a possible design solution, the method according to the second aspect may further include: The remote device determines the relay switching policy based on fifth indication information from a policy control network element. The fifth indication information indicates to establish the relay connection by using the connection mechanism used before the relay connection switching. In other words, in addition to establishing the relay connection by using, by default, the connection mechanism used before the relay connection switching, the remote device may alternatively flexibly determine, based on the indication of the policy control network element, whether to establish the relay connection by using the connection mechanism used before the relay connection switching, to meet relay switching requirements of different services.

In a possible design solution, the method according to the second aspect may further include: The remote device determines the relay switching policy based on a first access mechanism. The first access mechanism is a mechanism used by the remote device to access the network through the first relay device. Optionally, the first access mechanism may be either of the following mechanisms: a layer-2 access mechanism and a layer-3 with non-protocol access mechanism. It may be understood that when the remote device accesses the network by using the layer-2 access mechanism or the layer-3 with non-protocol access mechanism, the remote device may establish a session between the remote device and the network, to obtain the first service from the network. In this case, if the remote device implements fast switching by reusing the connection mechanism used before the relay connection switching, the remote device may further continue to reuse the session before the session becomes invalid, to continue to obtain the first service from the network. This can ensure service continuity.

In a possible design solution, the relay switching policy further indicates to access the network by using an access mechanism used before the relay connection switching, the first relay service identifier further indicates a first access mechanism, and the first access mechanism is a mechanism used by the remote device to access the network through the first relay device. That the remote device establishes a second relay connection to a second relay device based on the first relay service identifier and by using a first PC5 connection mechanism includes: The remote device determines, based on the first relay service identifier, to establish the relay connection to the second relay device by using the first PC5 connection mechanism and access the network by using the first PC5 connection mechanism. In this way, the remote device may establish the second relay connection to the second relay device by using the first PC5 connection mechanism, and access the network through the second relay device by using the first access mechanism.

It can be learned that when the remote device has accessed the network by using the first access mechanism, if the remote device expects to switch the relay connection, the remote device may continue to access the network by continuing to reuse the access mechanism used before the relay connection switching, namely, the first access mechanism, to further ensure the service continuity.

Optionally, that the remote device determines, based on the first relay service identifier, to establish the relay connection to the second relay device by using the first PC5 connection mechanism and access the network by using the first PC5 connection mechanism includes: The remote device broadcasts the first relay service identifier, to receive a relay service identifier of at least one relay device, where the relay service identifier of the at least one relay device includes a relay service identifier indicating the first PC5 connection mechanism and the first access mechanism. The remote device determines, based on the first relay service identifier, to establish the relay connection to the second relay device in the at least one relay device and access the network by using the first PC5 connection mechanism. The second relay device is a relay device corresponding to the relay service identifier indicating the first PC5 connection mechanism.

Optionally, that the remote device determines, based on the first relay service identifier, to establish the relay connection to the second relay device by using the first PC5 connection mechanism and access the network by using the first PC5 connection mechanism includes: The remote device receives a relay service identifier of at least one relay device, where the relay service identifier of the at least one relay device includes a relay service identifier indicating the first PC5 connection mechanism and the first access mechanism. The remote device determines, based on the first relay service identifier, to establish the relay connection to the second relay device in the at least one relay device and access the network by using the first PC5 connection mechanism. The second relay device is a relay device corresponding to the relay service identifier indicating the first PC5 connection mechanism.

Optionally, the method according to the second aspect may further include: The remote device determines the relay switching policy based on sixth indication information from a policy control network element. The sixth indication information indicates to establish the relay connection by using the connection mechanism used before the relay connection switching, and access the network by using the access mechanism used before the relay connection switching. In other words, the remote device may flexibly determine, based on the indication of the policy control network element, whether to establish the relay connection by using the connection mechanism used before the relay connection switching and whether to establish and access the network by using the access mechanism used before the relay connection switching, to meet relay switching requirements of different services.

Optionally, the method according to the second aspect may further include: The remote device determines the relay switching policy based on the first access mechanism. For example, the first access mechanism is either of the following mechanisms: a layer-2 access mechanism and a layer-3 with non-protocol access mechanism.

Optionally, at least one access mechanism includes at least one of the following: the layer-2 access mechanism, a layer-3 with protocol access mechanism, or the layer-3 with non-protocol access mechanism.

In a possible design solution, the first PC5 connection mechanism includes a mechanism for obtaining a relay connection key through a user plane of the network or a mechanism for obtaining a relay connection key through a control plane of the network.

In addition, for technical effects of the method according to the second aspect, refer to the technical effects of the method according to the first aspect. Details are not described herein again.

According to a third aspect, a communication method is provided. The method includes: A remote device establishes a first relay connection to a first relay device by using a first PC5 connection mechanism. The first relay connection is used by the remote device to obtain a first service of a network through the first relay device. The remote device obtains priority information of a first relay service identifier when the first relay connection needs to be switched, where the priority information of the first relay service identifier indicates that the first PC5 connection mechanism indicated by the first relay service identifier needs to be preferentially used. The remote device establishes a second relay connection to a second relay device based on the priority information of the first relay service identifier and by using the first PC5 connection mechanism, where the second relay connection is used by the remote device to obtain the first service of the network through the second relay device.

In a possible design solution, that the remote device establishes a second relay connection to a second relay device based on the priority information of the first relay service identifier and by using the first PC5 connection mechanism includes: The remote device determines, based on the priority information of the first relay service identifier, to establish the relay connection to the second relay device by using the first PC5 connection mechanism.

Optionally, that the remote device determines, based on the priority information of the first relay service identifier, to establish the relay connection to the second relay device by using the first PC5 connection mechanism includes: The remote device broadcasts the first relay service identifier, to receive a relay service identifier of at least one relay device, where the relay service identifier of the at least one relay device includes a relay service identifier indicating the first PC5 connection mechanism. In this way, the remote device determines, based on the priority information of the first relay service identifier, to establish the relay connection to the second relay device in the at least one relay device by using the first PC5 connection mechanism. The second relay device is a relay device corresponding to the relay service identifier indicating the first PC5 connection mechanism.

Alternatively, optionally, that the remote device determines, based on the priority information of the first relay service identifier, to establish the relay connection to the second relay device by using the first PC5 connection mechanism includes: The remote device receives a relay service identifier of at least one relay device, where the relay service identifier of the at least one relay device includes a relay service identifier indicating the first PC5 connection mechanism. In this way, the remote device determines, based on the priority information of the first relay service identifier, to establish the relay connection to the second relay device in the at least one relay device by using the first PC5 connection mechanism. The second relay device is a relay device corresponding to the relay service identifier indicating the first PC5 connection mechanism.

In a possible design solution, that the remote device determines priority information of a first relay service identifier includes: The remote device determines the priority information of the first relay service identifier based on first indication information from a policy control network element, where the first indication information indicates to establish the relay connection by preferentially using a connection mechanism used before relay connection switching.

In a possible design solution, that the remote device determines priority information of a first relay service identifier includes: The remote device determines the priority information of the first relay service identifier based on second indication information from a relay server, where the second indication information indicates to establish the relay connection by preferentially using the first PC5 connection mechanism.

Optionally, the method according to the third aspect may further include: The remote device sends a relay reselection request message to the relay server, where the relay reselection request message indicates that a connection mechanism used before relay connection switching is the first PC5 connection mechanism. The remote device receives a relay reselection response message returned by the relay server for the relay reselection request message, where the relay reselection response message carries the second indication information.

In a possible design solution, the remote device determines the priority information of the first relay service identifier based on a first access mechanism. The first access mechanism is a mechanism used by the remote device to access the network through the first relay device. For example, the first access mechanism may be either of the following mechanisms: a layer-2 access mechanism and a layer-3 with non-protocol access mechanism.

In a possible design solution, the priority information of the first relay service identifier further indicates that a first access mechanism in at least one access mechanism for network access needs to be preferentially used, and the first access mechanism is a mechanism used by the remote device to access the network through the first relay device. That the remote device establishes a second relay connection to a second relay device based on the priority information of the first relay service identifier and by using a first PC5 connection mechanism includes: The remote device determines, based on the priority information of the first relay service identifier, to establish the relay connection to the second relay device by using the first PC5 connection mechanism and access the network by using the first access mechanism. In this way, the remote device may establish the second relay connection to the second relay device by using the first PC5 connection mechanism, and access the network through the second relay device by using the first access mechanism.

Optionally, that the remote device determines, based on the priority information of the first relay service identifier, to establish the relay connection to the second relay device by using the first PC5 connection mechanism and access the network by using the first access mechanism includes: The remote device broadcasts the first relay service identifier, to receive a relay service identifier of at least one relay device. The relay service identifier of the at least one relay device includes a relay service identifier indicating the first PC5 connection mechanism and the first access mechanism. In this way, the remote device determines, based on the priority information of the first relay service identifier, to establish the relay connection to the second relay device in the at least one relay device by using the first PC5 connection mechanism and access the network by using the first access mechanism. The second relay device is a relay device corresponding to the relay service identifier indicating the first PC5 connection mechanism and the first access mechanism.

Optionally, that the remote device determines, based on the priority information of the first relay service identifier, to establish the relay connection to the second relay device by using the first PC5 connection mechanism and access the network by using the first access mechanism includes: The remote device receives a relay service identifier of at least one relay device. The relay service identifier of the at least one relay device includes a relay service identifier indicating the first PC5 connection mechanism and the first access mechanism. In this way, the remote device determines, based on the priority information of the first relay service identifier, to establish the relay connection to the second relay device in the at least one relay device by using the first PC5 connection mechanism and access the network by using the first access mechanism. The second relay device is a relay device corresponding to the relay service identifier indicating the first PC5 connection mechanism and the first access mechanism.

Optionally, that the remote device determines priority information of a first relay service identifier includes: The remote device determines the priority information of the first relay service identifier based on third indication information from a policy control network element. The third indication information indicates to establish the relay connection by preferentially using a connection mechanism used before the relay connection switching, and access the network by preferentially using an access mechanism used before the relay connection switching.

Optionally, that the remote device determines priority information of a first relay service identifier includes: The remote device determines the priority information of the first relay service identifier based on fourth indication information from a relay server. The fourth indication information indicates to establish the relay connection by preferentially using the first PC5 connection mechanism, and access the network by preferentially using the first access mechanism.

Further, the method according to the third aspect may include: The remote device sends a relay reselection request message to the relay server. The relay reselection request message indicates that a connection mechanism used before relay connection switching is the first PC5 connection mechanism, and an access mechanism used before the relay connection switching is the first access mechanism. The remote device receives a relay reselection response message returned by the relay server for the relay reselection request message, where the relay reselection response message carries the fourth indication information.

Optionally, the method according to the third aspect may further include: The remote device determines the priority information of the first relay service identifier based on the first access mechanism. For example, the first access mechanism is either of the following mechanisms: a layer-2 access mechanism and a layer-3 with non-protocol access mechanism.

Optionally, the at least one access mechanism includes at least one of the following: the layer-2 access mechanism, a layer-3 with protocol access mechanism, or the layer-3 with non-protocol access mechanism.

In a possible design solution, the first PC5 connection mechanism includes a mechanism for obtaining a relay connection key through a user plane of the network or a mechanism for obtaining a relay connection key through a control plane of the network.

In addition, for technical effects of the method according to the third aspect, refer to the technical effects of the method according to the first aspect. Details are not described herein again.

According to a fourth aspect, a communication method is provided. The method includes: A remote device establishes a first relay connection to a first relay device by using a first PC5 connection mechanism. The first relay connection is used by the remote device to obtain a first service of a network through the first relay device. The remote device determines a first relay service identifier according to a relay switching policy when the first relay connection needs to be switched, to establish a second relay connection to a second relay device based on the first relay service identifier and by using the first PC5 connection mechanism. The relay switching policy indicates to establish the relay connection by using a connection mechanism used before relay connection switching, the first relay service identifier indicates the first PC5 connection mechanism, and the second relay connection is used by the remote device to obtain the first service of the network through the second relay device.

In a possible design solution, that the remote device establishes a second relay connection to a second relay device based on the first relay service identifier and by using the first PC5 connection mechanism includes: The remote device determines, based on the first relay service identifier, to establish the relay connection to the second relay device by using the first PC5 connection mechanism.

Optionally, that the remote device determines, based on the first relay service identifier, to establish the relay connection to the second relay device by using the first PC5 connection mechanism includes: The remote device broadcasts the first relay service identifier, to receive a relay service identifier of at least one relay device. The relay service identifier of the at least one relay device includes a relay service identifier indicating the first PC5 connection mechanism. The remote device determines, based on the first relay service identifier, to establish the relay connection to the second relay device in the at least one relay device. The second relay device is a relay device corresponding to the relay service identifier indicating the first PC5 connection mechanism.

Optionally, that the remote device determines, based on the first relay service identifier, to establish the relay connection to the second relay device by using the first PC5 connection mechanism includes: The remote device receives a relay service identifier of at least one relay device. The relay service identifier of the at least one relay device includes a relay service identifier indicating the first PC5 connection mechanism. The remote device determines, based on the first relay service identifier, to establish the relay connection to the second relay device in the at least one relay device. The second relay device is a relay device corresponding to the relay service identifier indicating the first PC5 connection mechanism.

In a possible design solution, the method according to the fourth aspect may further include: The remote device determines the relay switching policy based on fifth indication information from a policy control network element. The fifth indication information indicates to establish the relay connection by using the connection mechanism used before the relay connection switching.

In a possible design solution, the method according to the fourth aspect may further include: The remote device determines the relay switching policy based on a first access mechanism. The first access mechanism is a mechanism used by the remote device to access the network through the first relay device. Optionally, the first access mechanism may be either of the following mechanisms: a layer-2 access mechanism and a layer-3 with non-protocol access mechanism.

In a possible design solution, the relay switching policy further indicates to access the network by using an access mechanism used before the relay connection switching, the first relay service identifier further indicates a first access mechanism, and the first access mechanism is a mechanism used by the remote device to access the network through the first relay device. That the remote device establishes a second relay connection to a second relay device based on the first relay service identifier and by using the first PC5 connection mechanism includes: The remote device determines, based on the first relay service identifier, to establish the relay connection to the second relay device by using the first PC5 connection mechanism and access the network by using the first PC5 connection mechanism. In this way, the remote device may establish the second relay connection to the second relay device by using the first PC5 connection mechanism, and access the network through the second relay device by using the first access mechanism.

Optionally, that the remote device determines, based on the first relay service identifier, to establish the relay connection to the second relay device by using the first PC5 connection mechanism and access the network by using the first PC5 connection mechanism includes: The remote device broadcasts the first relay service identifier, to receive a relay service identifier of at least one relay device, where the relay service identifier of the at least one relay device includes a relay service identifier indicating the first PC5 connection mechanism and the first access mechanism. The remote device determines, based on the first relay service identifier, to establish the relay connection to the second relay device in the at least one relay device and access the network by using the first PC5 connection mechanism. The second relay device is a relay device corresponding to the relay service identifier indicating the first PC5 connection mechanism.

Optionally, that the remote device determines, based on the first relay service identifier, to establish the relay connection to the second relay device by using the first PC5 connection mechanism and access the network by using the first PC5 connection mechanism includes: The remote device receives a relay service identifier of at least one relay device, where the relay service identifier of the at least one relay device includes a relay service identifier indicating the first PC5 connection mechanism and the first access mechanism. The remote device determines, based on the first relay service identifier, to establish the relay connection to the second relay device in the at least one relay device and access the network by using the first PC5 connection mechanism. The second relay device is a relay device corresponding to the relay service identifier indicating the first PC5 connection mechanism.

Optionally, the method according to the fourth aspect may further include: The remote device determines the relay switching policy based on sixth indication information from a policy control network element. The sixth indication information indicates to establish the relay connection by using the connection mechanism used before the relay connection switching, and access the network by using the access mechanism used before the relay connection switching.

Optionally, the method according to the fourth aspect may further include: The remote device determines the relay switching policy based on the first access mechanism. For example, the first access mechanism is either of the following mechanisms: a layer-2 access mechanism and a layer-3 with non-protocol access mechanism.

Optionally, at least one access mechanism includes at least one of the following: the layer-2 access mechanism, a layer-3 with protocol access mechanism, or the layer-3 with non-protocol access mechanism.

In a possible design solution, the first PC5 connection mechanism includes a mechanism for obtaining a relay connection key through a user plane of the network or a mechanism for obtaining a relay connection key through a control plane of the network.

In addition, for technical effects of the method according to the fourth aspect, refer to the technical effects of the method according to the first aspect. Details are not described herein again.

According to a fifth aspect, a communication apparatus is provided. The communication apparatus includes modules, for example, a transceiver module and a processing module, configured to perform the method according to the first aspect. For example, the transceiver module is configured to perform a transceiver function of the communication apparatus, and the processing module is configured to perform a function other than the transceiver function of the communication apparatus.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus is enabled to perform the method according to the first aspect.

It may be understood that the communication apparatus according to the fifth aspect may be a terminal, for example, a remote device, may be a chip (system) or another part or component that may be disposed in the terminal, or may be an apparatus including the terminal. This is not limited in this application.

In addition, for technical effects of the communication apparatus according to the fifth aspect, refer to the technical effects of the method according to the first aspect. Details are not described herein again.

According to a sixth aspect, a communication apparatus is provided. The communication apparatus includes modules, for example, a transceiver module and a processing module, configured to perform the method according to the second aspect. For example, the transceiver module is configured to indicate a transceiver function of the communication apparatus, and the processing module is configured to perform a function other than the transceiver function of the communication apparatus.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module, and the storage module stores a program or instructions. When the processing module executes the program or the instructions, the communication apparatus is enabled to perform the method according to the second aspect.

It may be understood that the communication apparatus according to the sixth aspect may be a terminal, for example, a remote device, may be a chip (system) or another part or component that may be disposed in the terminal, or may be an apparatus including the terminal. This is not limited in this application.

In addition, for technical effects of the communication apparatus according to the sixth aspect, refer to the technical effects of the method according to the second aspect. Details are not described herein again.

According to a seventh aspect, a communication apparatus is provided. The communication apparatus includes a processor, and the processor is configured to perform the method according to any possible implementation of the first aspect or the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design solution, the communication apparatus according to the seventh aspect may further include a memory. The memory and the processor may be integrated together, or may be disposed separately. The memory may be configured to store a computer program and/or data related to the method according to either of the first aspect and the second aspect.

In this embodiment of this application, the communication apparatus according to the seventh aspect may be the terminal according to either of the first aspect and the second aspect, may be a chip (system) or another part or component that may be disposed in the terminal, or may be an apparatus including the terminal.

In addition, for technical effects of the communication apparatus according to the seventh aspect, refer to the technical effects of the method according to any implementation of the first aspect or the second aspect. Details are not described herein again.

According to an eighth aspect, a communication apparatus is provided. The communication apparatus includes a processor, where the processor is coupled to a memory, and the processor is configured to execute a computer program stored in the memory, to enable the communication apparatus to perform the method according to any possible implementation of the first aspect or the second aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this embodiment of this application, the communication apparatus according to the eighth aspect may be the terminal according to either of the first aspect and the second aspect, may be a chip (system) or another part or component that may be disposed in the terminal, or may be an apparatus including the terminal.

In addition, for technical effects of the communication apparatus according to the eighth aspect, refer to the technical effects of the method according to any implementation of the first aspect or the second aspect. Details are not described herein again.

According to a ninth aspect, a communication apparatus is provided, including a processor and a memory, where the memory is configured to store a computer program; and when the processor executes the computer program, the communication apparatus is enabled to perform the method according to any implementation of the first aspect or the second aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this embodiment of this application, the communication apparatus according to the ninth aspect may be the terminal according to either of the first aspect and the second aspect, may be a chip (system) or another part or component that may be disposed in the terminal, or may be an apparatus including the terminal.

In addition, for technical effects of the communication apparatus according to the ninth aspect, refer to the technical effects of the method according to any implementation of the first aspect or the second aspect. Details are not described herein again.

According to a tenth aspect, a communication system is provided. The communication system includes a remote device, a first relay device, and a second relay device. The remote device, the first relay device, and the second relay device are configured to perform the method according to the third aspect or the method according to the fourth aspect.

According to an eleventh aspect, a computer-readable storage medium is provided, including a computer program or instructions, where when the computer program or the instructions are run on a computer, the computer is enabled to perform the method according to any possible implementation of the first aspect or the second aspect.

According to a twelfth aspect, a computer program product is provided, including a computer program or instructions. When the computer program or the instructions are run on a computer, the computer is enabled to perform the method according to any possible implementation of the first aspect or the second aspect.

### BRIEF DESCRIPTION OF DRAWINGS

FIG. 1 is a diagram of an architecture of a 5GS;
FIG. 2 is a diagram of a control-plane architecture of ProSe communication;
FIG. 3 is a schematic flowchart of ProSe communication;
FIG. 4 is a diagram of a protocol stack of a layer-2 relay mechanism;
FIG. 5 is a diagram of a protocol stack of a layer-3 relay mechanism;
FIG. 6 is a diagram of a protocol stack of a layer-3 relay + N3IWF mechanism;
FIG. 7 is a schematic flowchart of determining a PC5 connection mechanism and an access mechanism by a remote end;
FIG. 8 is a schematic flowchart of ProSe discovery;
FIG. 9 is a diagram of an architecture of a communication system according to an embodiment of this application;
FIG. 10 is a schematic flowchart 1 of a communication method according to an embodiment of this application;
FIG. 11 is a schematic flowchart 2 of a communication method according to an embodiment of this application;
FIG. 12 is a schematic flowchart 3 of a communication method according to an embodiment of this application;
FIG. 13 is a schematic flowchart 4 of a communication method according to an embodiment of this application;
FIG. 14 is a schematic flowchart 5 of a communication method according to an embodiment of this application;
FIG. 15 is a schematic flowchart 6 of a communication method according to an embodiment of this application;
FIG. 16 is a diagram 1 of a structure of a communication apparatus according to an embodiment of this application; and
FIG. 17 is a diagram 2 of a structure of a communication apparatus according to an embodiment of this application.

### DESCRIPTION OF EMBODIMENTS

For ease of understanding, the following first describes terminologies in embodiments of this application.

### 1. 5th generation (5th generation, 5G) mobile communication system (5G system (5G system, 5GS) for short):

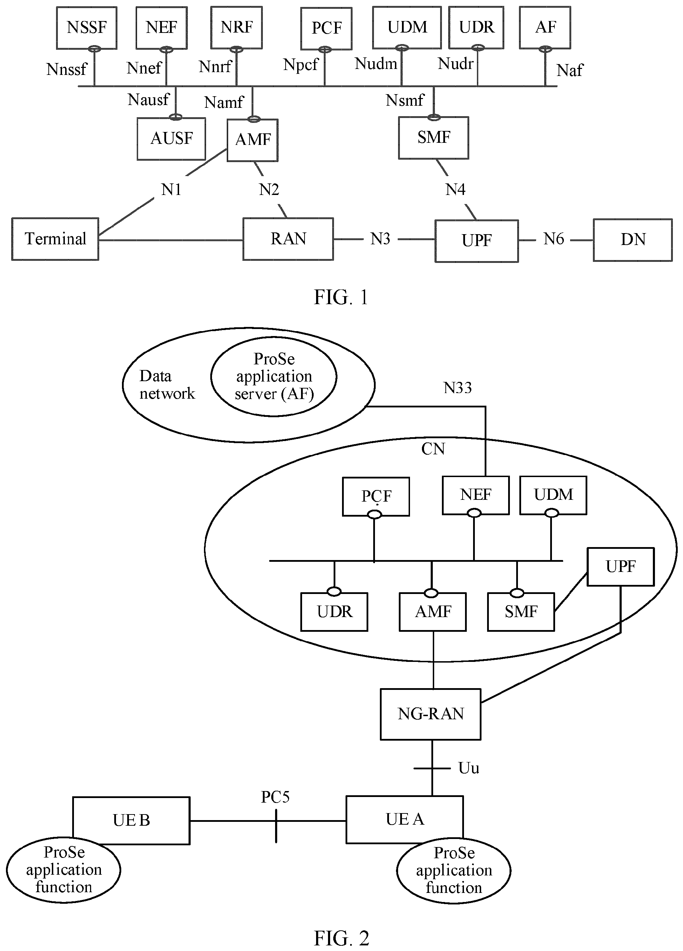

FIG. 1 is a diagram of an architecture of the 5GS. As shown in FIG. 1, the 5GS defined by the 3rd generation partnership project (3rd generation partnership project, 3GPP) includes an access network (access network, AN) and a core network (core network, CN), and may further include a terminal.

The terminal may be a terminal having a transceiver function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), an uncrewed aerial vehicle (uncrewed aerial vehicle), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) with a terminal function, or the like. Alternatively, the terminal in this application may be a vehicle-mounted module, a vehicle-mounted subassembly, a vehicle-mounted component, a vehicle-mounted chip, or a vehicle-mounted unit that is built in a vehicle as one or more components or units.

The AN is configured to implement an access-related function, may provide a network access function to an authorized user in a specific area, and can determine transmission links of different quality based on a user level, a service requirement, and the like for transmission of user data. The AN forwards a control signal and the user data between the terminal and the CN. The AN may include an access network device, where the access network device may also be referred to as a radio access network (radio access network, RAN) device. The CN is mainly responsible for maintaining subscription data of a mobile network, and providing functions such as session management, mobility management, policy management, and security authentication for the terminal. The CN mainly includes: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), and an application function (application function, AF).

As shown in FIG. 1, the UE accesses a 5G network through the RAN device, and communicates with the AMF over an N1 interface (N1 for short). The RAN communicates with the AMF over an N2 interface (N2 for short). The RAN communicates with the UPF over an N3 interface (N3 for short). The SMF communicates with the UPF over an N4 interface (N4 for short). The UPF accesses a data network (data network, DN) over an N6 interface (N6 for short). In addition, the control plane functions such as the AUSF, the AMF, the SMF, the NSSF, the NEF, the NRF, the PCF, the UDM, the UDR, and the AF shown in FIG. 1 interact with each other over service-oriented interfaces. For example, a service-oriented interface externally provided by the AUSF includes Nausf, a service-oriented interface externally provided by the AMF includes Namf, a service-oriented interface externally provided by the SMF includes Nsmf, a service-oriented interface externally provided by the NSSF includes Nnssf, a service-oriented interface externally provided by the NEF includes Nnef, a service-oriented interface externally provided by the NRF includes Nnrf, a service-oriented interface externally provided by the PCF includes Npcf, a service-oriented interface externally provided by the UDM includes Nudm, a service-oriented interface externally provided by the UDR includes Nudr, and a service-based interface provided by the AF includes Naf.

The RAN device may be a device that provides access to the terminal. For example, the RAN device may include an access network device, for example, a 6G base station, in a next-generation mobile communication system, for example, a 6G mobile communication system. Alternatively, in a next-generation mobile communication system, the network device may be named in another manner, and the another manner falls within the protection scope of embodiments of this application. This is not limited in this application. Alternatively, the RAN device may include a gNB in a 5G system, for example, a new radio (new radio, NR) system, or one antenna panel or a group of antenna panels (including a plurality of antenna panels) of a base station in the 5G system; or may be a network node, for example, a baseband unit (baseband unit, BBU), a central unit (central unit, CU), a distributed unit (distributed unit, DU), an RSU having a base station function, or a wireline access gateway, included in a gNB, a transmission point (transmission reception point, TRP, or transmission point, TP), or a transmission measurement function (transmission measurement function, TMF), or a 5G core network. Alternatively, the RAN device may include an access point (access point, AP) in a wireless fidelity (wireless fidelity, Wi-Fi) system, a wireless relay node, a wireless backhaul node, or various forms of macro base stations, micro base stations (also referred to as small cells), relay stations, access points, wearable devices, vehicle-mounted devices, and the like.

The UPF is mainly responsible for user data processing (forwarding, receiving, charging, and the like). For example, the UPF may receive user data from the data network (data network, DN), and forward the user data to the terminal through the access network device. Alternatively, the UPF may receive user data from the terminal through the access network device, and forward the user data to the DN. The DN is a carrier network, for example, an internet protocol (internet protocol, IP) multi-media service (IP multi-media service, IMS) or the internet (internet), that provides a data transmission service to a user. The DN may be an external network of a carrier, or may be a network controlled by the carrier, and is configured to provide a service to the terminal device. In a protocol data unit (protocol data unit, PDU) session, a UPF that is directly connected to the DN over N6 is also referred to as a protocol data unit session anchor (protocol data unit Session Anchor, PSA).

The AUSF is mainly configured to perform security authentication on the terminal.

The AMF is mainly for mobility management, such as user location update, registration of the user with the network, and user switching, in the mobile network.

The SMF is mainly for session management, such as session establishment, modification, and release, in the mobile network. Specific functions are, for example, assigning an internet protocol (internet protocol, IP) address to the user, and selecting a UPF that provides a data packet forwarding function.

The PCF mainly supports providing a unified policy framework to control network behavior, and providing a policy rule to a control-layer network function, and is also responsible for obtaining policy decision-related user subscription information. The PCF may provide policies, such as a quality of service (quality of service, QoS) policy and a slice selection policy, to the AMF and the SMF.

The NSSF is mainly configured to select a network slice for the terminal.

The NEF is mainly configured to support capability and event exposure. For example, the NEF may expose some capabilities of the 5G network to a third-party application through an application programming interface (application programming interface, API), and the third-party application obtains the capabilities of the 5G network by invoking, through the AF, the API provided by the NEF, so that the third-party application can control some behavior of the 5G network and the terminal.

The UDM is mainly configured to store user data, for example, subscription data and authentication/authorization data.

The UDR is mainly configured to store structured data, and stored content includes subscription data, policy data, externally-exposed structured data, and application related data.

The AF mainly supports interaction with the CN to provide a service, for example, influencing data routing decision, a policy control function, or providing some third-party services to a network side.

It may be understood that the function in embodiments of this application may also be represented as a functional network element or a functional entity. For example, the UPF may be represented as a UPF network element, the AMF may be represented as an AMF network element, the SMF may be represented as an SMF network element, the PCF may be represented as a PCF network element, and so on. The rest can be deduced by analogy, and this is not limited.

### 2. Short-range communication:

With rapid development of mobile communication, data services of new service types such as video chat and virtual reality (virtual reality, VR)/augmented reality (augmented reality, AR) are widely used. This increases bandwidth requirements of users. In view of this, the short-range communication such as device-to-device (device-to-device, D2D) communication is a solution.

The D2D communication allows direct communication between UEs, for example, communication over a PC5 interface, to implement information transmission on a data plane and a control plane. In this way, under control of a cellular (cell) network, a user may share a spectrum resource with another cellular user, to effectively improve utilization of the spectrum resource. The D2D communication includes one-to-many communication (one-to-many communication) and one-to-one communication (one-to-one communication). The one-to-many communication usually corresponds to multicast and broadcast communication, and the one-to-one communication usually corresponds to unicast communication. In the one-to-one communication, if a sending UE and a receiving UE are within a short range, the sending UE and the receiving UE may directly communicate with each other after mutual discovery.

### 3. Proximity-based services (proximity-based services, ProSe) communication:

The ProSe communication is also referred to as short-range service communication, and is a typical service scenario in the D2D communication. The ProSe communication may include proximity-based services direct communication and proximity-based services UE-to-network relay communication. For the proximity-based services UE-to-network relay communication (which may be referred to as ProSe communication for short):

FIG. 2 is a diagram of a control-plane architecture of the ProSe communication. As shown in FIG. 2, when a specific UE (denoted as a UE B) is located outside network coverage, a signal of communication between the UE B and a RAN device is poor, or another UE (denoted as a UE A) is needed to assist in data transmission, the UE B may access a network with assistance of the UE A.

The UE B may be referred to as a proximity-based services remote UE (ProSe remote UE) or a 5G proximity-based services remote UE (5G ProSe remote UE), or may be referred to as a remote UE (remote UE) for short. The UE A may be referred to as a proximity-based services UE-to-network relay (ProSe UE-to-network relay) or a 5G proximity-based services UE-to-network relay (5G ProSe UE-to-network relay), or may be referred to as a relay UE (relay UE) for short. The remote UE and the relay UE may support a proximity-based services application (ProSe application) function to support the remote UE in establishing a PC5 connection to the relay UE, to communicate with the network through the relay UE (in other words, perform ProSe communication) to obtain a service provided by the network.

An AF may be a proximity-based services application server (ProSe application server), namely, an AF that supports a proximity-based services application service. The ProSe application server has all functions of an AF defined in the version 23.501 R-15 and a function related to a ProSe service. The ProSe application server and the UE may perform user-plane communication via a path: UE-RAN-UPF-AF. The ProSe application server may further communicate with another NF (network function) in a CN through a NEF, for example, communicate with a PCF.

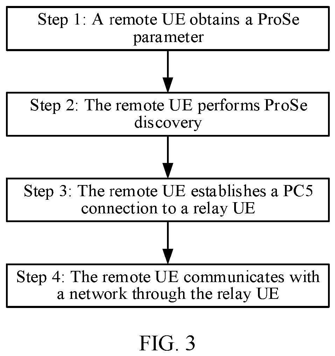

FIG. 3 is a schematic flowchart of ProSe communication. As shown in FIG. 3, a procedure includes the following steps.

### Step 1: A remote UE obtains a ProSe parameter.

The ProSe parameter may be a parameter for implementing the ProSe communication. The ProSe parameter may include a ProSe communication-related parameter in a UE route selection policy (UE route selection policy, URSP), for example, a ProSe communication-related route selection descriptor (route selection descriptor, RSD). The ProSe parameter further includes a ProSe policy (ProSe policy). The RSD may indicate a mechanism (denoted as an access mechanism) for the remote UE to access a network, where the mechanism includes, for example, at least one of the following: a layer-2 relay (L2 relay) mechanism, a layer-3 relay (L3 relay) mechanism, or a layer-3 relay + non-3GPP interworking function (non-3GPP interworking function, N3IWF) mechanism. It may be understood that the layer-2 relay mechanism may also be referred to as a layer-2 access mechanism, the layer-3 relay mechanism may also be referred to as a layer-3 with protocol access mechanism, and the layer-3 relay + non-3GPP interworking function mechanism may also be referred to as a layer-3 with non-protocol access mechanism.

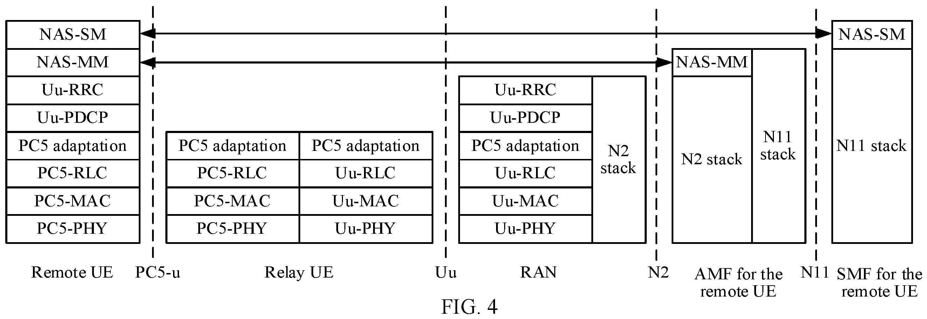

FIG. 4 is a diagram of a protocol stack of the layer-2 relay mechanism. As shown in FIG. 4, the layer-2 relay mechanism is a mechanism for accessing the network through a layer-2 relay device. In this case, a network side (for example, a RAN or an AMF) can sense existence of the remote UE. For example, the remote UE may establish a secure connection to the RAN through a PC5 connection. In this case, security between the remote UE and the RAN is established between a packet data convergence protocol (packet data convergence protocol, PDCP) layer of the remote UE and a PDCP layer of the RAN in an end-to-end manner. The remote UE may register with the network through ProSe communication provided by the layer-2 relay UE, and establish or modify a PDU session of the remote UE, to obtain a service from a DN through the PDU session. The relay UE does not parse the PDCP layer, but transparently transmits information at the PDCP layer of the remote UE, the PDCP layer of the RAN, and a layer above the PDCP layers, for example, information indicating that the remote UE registers with the network, information indicating that the remote UE initiates the establishment or modification of the PDU session, or user-plane data of the remote UE.

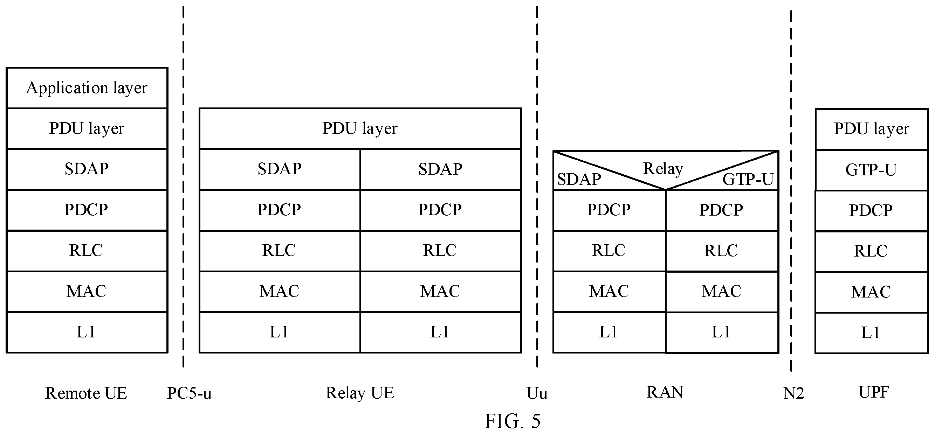

FIG. 5 is a diagram of a protocol stack of the layer-3 relay mechanism. As shown in FIG. 5, the layer-3 relay mechanism is a mechanism for accessing the network through a layer-3 relay device. In this case, the network usually cannot sense existence of the remote UE. Security between the remote UE and a RAN is established by segments, and includes security from a PDCP layer of the remote UE to a PDCP layer of the relay UE and security from the PDCP layer of the relay UE to a PDCP layer of the RAN. The relay UE needs to establish or modify a PDU session for the remote UE. In other words, ProSe communication that is between the remote UE and the network and that is provided by the layer-3 relay UE is implemented through multiplexing of a PDU session of the relay UE. The establishment or modification of the PDU session complies with a definition in TS 23.502. The relay UE needs to parse the PDCP layer, to determine to forward data to the remote UE.

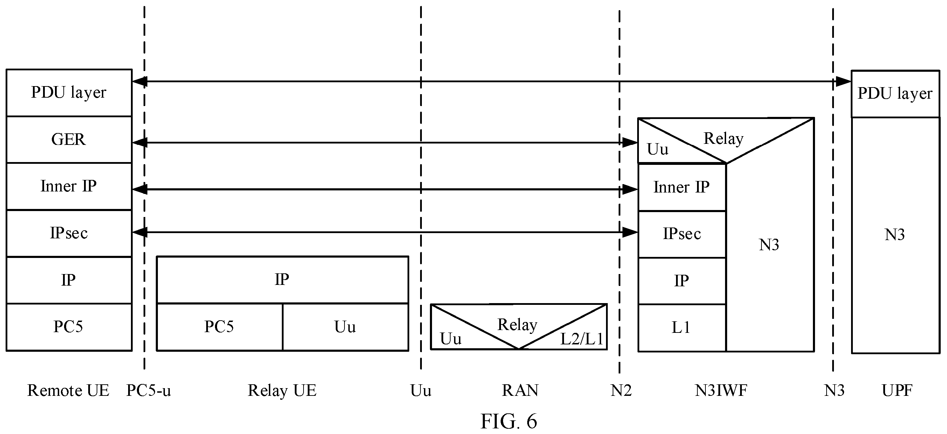

FIG. 6 is a diagram of a protocol stack of the layer-3 relay + N3IWF mechanism. As shown in FIG. 6, the layer-3 relay + N3IWF mechanism is a mechanism for accessing the network through a layer-3 relay device and by using a non-3GPP protocol (non-protocol). The remote UE needs to establish a secure channel from the remote UE to an N3IWF by using the layer-3 relay + N3IWF mechanism, and access a network side through the secure channel. In this case, the network side can sense existence of the remote UE. ProSe communication that is between the remote UE and the network and that is provided by using the layer-3 relay + N3IWF mechanism means: The remote UE establishes the secure channel to the N3IWF by using the mechanism for accessing a network through a layer-3 relay device and by using a non-3GPP protocol, to register with the network and establish or modify a PDU session of the remote UE to obtain a service from a DN through the PDU session.

It may be understood that in the layer-2 relay mechanism, the remote UE may be referred to as a 5G ProSe layer-2 remote UE, a ProSe layer-2 remote UE, or a layer-2 remote UE. Similarly, in the layer-3 relay mechanism or the layer-3 relay + N3IWF mechanism, the remote UE may be referred to as a 5G ProSe layer 3 remote UE, a ProSe layer 3 remote UE, or a layer-3 remote UE. Similarly, in the layer-2 relay mechanism, the relay UE may be referred to as a 5G ProSe layer-2 relay UE, a ProSe layer-2 relay UE, or a layer-2 relay UE. Similarly, in the layer-3 relay mechanism or the layer-3 relay + N3IWF mechanism, the relay UE may be referred to as a 5G ProSe layer-3 relay UE, a ProSe layer-3 relay UE, or a layer-3 relay UE.

Different RSDs may indicate different access mechanisms. For example, an RSD 1 indicates the layer-2 relay mechanism, an RSD 2 indicates the layer-3 relay mechanism, and an RSD 3 indicates the layer-3 relay + N3IWF mechanism. Different RSDs may have use priorities, to indicate use priorities of different access mechanisms. For example, use priorities of the RSD 1 to the RSD 3 in descending order are: the RSD 1, the RSD 2, and the RSD 3, to indicate that the use priorities of the different access mechanisms in descending order are: the layer-2 relay mechanism, the layer-3 relay mechanism, and the layer-3 relay + N3IWF mechanism. In addition, the RSD may further indicate other information, for example, a data network name (data network name, DNN) or a slice (slice), needed by the remote UE to obtain the service from the DN through the ProSe communication. This is not limited.

It may be understood that different URSPs may be configured for the remote UE, and have use priorities. The remote UE may sequentially select the different URSPs based on a descending order of the use priorities of the URSPs to use. The remote UE may configure different RSDs in a same URSP, and the different RSDs have use priorities. The remote UE may sequentially select the different RSDs based on a descending order of the use priorities of the RSDs in the same URSP to use.

The ProSe policy may indicate a mechanism (denoted as a PC5 connection mechanism) for establishing the PC5 connection and the foregoing access mechanism. For example, the ProSe policy may include a relay service code (relay service code, RSC), and the RSC may indicate the PC5 connection mechanism and the access mechanism.

The PC5 connection mechanism may include a user plane (user plane, UP) mechanism and a control plane (control plane, CP) mechanism.

The CP-based mechanism is a mechanism for obtaining a relay connection key through a control plane of the network. For example, when the remote UE needs to access the network through a relay, the remote UE may perform ProSe discovery to discover the relay UE. The remote UE may send a direct communication request message to the relay UE, to initiate establishment of the PC5 connection. In the UP-based mechanism, the direct communication request message may include: a subscription concealed identifier (subscription concealed identifier, SUCI) of the remote UE and an RSC of the remote UE. The relay UE may send a key obtaining request message to the AMF based on the direct communication request message, so that the AMF sends an authentication request message to an AUSF after verifying that the relay UE has permission to serve as the relay. The AUSF may obtain an authentication vector from a UDM based on the authentication request message, to perform ProSe authentication on the remote UE. When the ProSe authentication succeeds, the remote UE and the AUSF separately generate a CP-PRUK and a CP-PRUK ID. The CP-PRUK is a root key of the PC5 connection in the CP-based mechanism, and the CP-PRUK ID is an identifier of the root key. The AUSF may generate KNR_ProSe based on the CP-PRUK, and send KNR_ProSe to the relay UE. KNR_ProSe may be a key of the PC5 connection in the CP-based mechanism. The remote UE may autonomously generate KNR_ProSe based on the CP-PRUK. In this case, both the remote UE and the relay UE obtain KNR_ProSe, and may establish a PC5 secure connection by using KNR_ProSe.

The AUSF may further store the CP-PRUK, the CP-PRUK ID, the RSC of the remote UE, and a subscription permanent identifier (subscription permanent identifier, SUPI) of the remote UE in a PAnF (ProSe anchor function). The remote UE may further send a direct communication request message to the relay UE again. In this case, in the CP-based mechanism, the direct communication request message may further include the CP-PRUK ID, to indicate that the ProSe authentication procedure has been performed on the remote UE before. The AUSF may directly obtain the corresponding CP-PRUK from the PAnF based on the CP-PRUK ID and the RSC of the remote UE without performing a ProSe authentication procedure again.

It may be understood that, for a specific procedure in the CP-based mechanism, refer to related descriptions in TS 33.503. Details are not described.

The UP-based mechanism is a mechanism for obtaining a relay connection key through a user plane of the network. For example, a PKMF (ProSe key management function) address of the remote UE and a PKMF address of the relay UE are respectively preconfigured on the remote UE and the relay UE. The remote UE needs to obtain a UP-PRUK and a UP-PRUK ID from a PKMF of the remote UE by using UP signaling. The UP-PRUK is a root key of the PC5 connection in the UP-based mechanism, and the UP-PRUK ID is an identifier of the root key. When the remote UE needs to access the network through a relay, the remote UE may perform ProSe discovery to discover the relay UE. The remote UE may send a direct communication request message to the relay UE, to initiate establishment of the PC5 connection. In the UP-based mechanism, the direct communication request message may include: an identifier of a home public land mobile network (home public land mobile network, HPLMN), for example, an HPLMN ID, of the UE and a SUCI of the UE (where the SUCI of the remote UE may alternatively be replaced with the UP-PRUK ID). The relay UE may send a key obtaining request message to a PKMF of the relay UE based on the direct communication request message, so that the PKMF of the relay UE verifies that the relay UE has permission to serve as the relay. In this case, the PKMF of the relay UE may determine the PKMF of the remote UE based on the HPLMN ID of the remote UE and the SUCI of the remote UE (where the SUCI of the remote UE may alternatively be replaced with the UP-PRUK ID), and obtain KNRP (new radio PC5, NRP) and a KNRP freshness parameter (KNRP freshness parameter) from the PKMF of the remote UE. The PKMF of the relay UE sends KNRP and the KNRP freshness parameter to the relay UE. KNRP may be a key of the PC5 connection in the UP-based mechanism. After obtaining KNRP, the relay UE sends the KNRP freshness parameter to the remote UE, and the remote UE autonomously determines KNRP based on the UP-PRUK and the KNRP freshness parameter. In this case, both the remote UE and the relay UE obtain KNRP, and may establish a PC5 secure connection by using KNRP.

It may be understood that, for a specific procedure in the UP-based mechanism, refer to related descriptions in TS 33.503. Details are not described.

Different RSCs may indicate different access mechanisms and PC5 connection mechanisms. For example, an RSC 1 indicates the CP-based mechanism + the layer-2 relay mechanism, an RSC 2 indicates the CP-based mechanism + the layer-3 relay mechanism, an RSC 3 indicates the CP-based mechanism + the layer-3 relay + N3IWF mechanism, an RSC 4 indicates the UP-based mechanism + the layer-2 relay mechanism, an RSC 5 indicates the UP-based mechanism + the layer-3 relay mechanism, and an RSC 6 indicates the UP-based mechanism + the layer-3 relay + N3IWF mechanism.

ProSe parameters obtained by the remote UE may have different sources, and the ProSe parameters from different sources have use priorities.

For example, the remote UE may obtain a ProSe parameter from a PCF, and the ProSe parameter is denoted as a ProSe parameter 1. Specifically, for a specific implementation principle of obtaining, by the remote UE from the PCF, the ProSe communication-related parameter in the URSP, refer to related descriptions in section 4.16.11 in TS 23.502. Details are not described. For the ProSe policy, the remote UE may send a 5G ProSe policy provisioning request (5G ProSe policy provisioning request) message to the AMF. The 5G ProSe policy provisioning request message may include a 5G ProSe UE-to-network relay communication capability. For example, the remote UE has a relay communication capability of serving as a layer-2 remote UE, and/or the remote UE has a relay communication capability of serving as a layer-3 remote UE. That the remote UE has a relay communication capability of serving as a layer-2 remote UE means: The remote UE supports access to the network by using the layer-2 relay mechanism. That the remote UE has a relay communication capability of serving as a layer-3 remote UE means: The remote UE supports access to the network by using the layer-3 relay mechanism and the layer-3 relay + N3IWF mechanism. The AMF may obtain ProSe subscription information of the remote UE from the UDM, and determine, based on the ProSe subscription information of the remote UE, that the remote UE has the 5G ProSe UE-to-network relay communication capability. In this way, the AMF may send a 5G ProSe policy provisioning request message to the PCF, so that the PCF sends the ProSe policy through a UE configuration update (UE configuration update, UCU) procedure.

The remote UE may obtain a ProSe parameter from a ProSe application server, and the ProSe parameter is denoted as a ProSe parameter 2.

The remote UE may alternatively obtain a ProSe parameter from a universal integrated circuit card (universal integrated circuit card, UICC) of the remote UE, and the ProSe parameter is denoted as a ProSe parameter 3.

The remote UE may alternatively obtain a ProSe parameter from a mobile equipment (mobile equipment, ME) of the remote UE, and the ProSe parameter is denoted as a ProSe parameter 4.

In this case, use priorities of the ProSe parameters in descending order are: the ProSe parameter 1, the ProSe parameter 2, the ProSe parameter 3, and the ProSe parameter 4. The remote UE may determine, based on the descending order of the use priorities of the ProSe parameters, a specific ProSe parameter to be used, and the specific ProSe parameter is denoted as a target ProSe parameter.

When the ProSe communication needs to be performed, the remote UE may determine, based on the target ProSe parameter, a specific PC5 connection mechanism and a specific access mechanism that are to be used. For example, the remote UE may select a URSP with a highest priority based on the use priorities of the URSPs. The remote UE may select an RSD with a highest priority based on use priorities of RSDs in the URSP with the highest priority. The remote UE may traverse ProSe policies based on an access mechanism indicated by the RSD with the highest priority, to determine an RSC corresponding to the access mechanism indicated by the RSD with the highest priority, and perform step 2 by using the RSC.

For ease of understanding, the following provides descriptions by using an example.

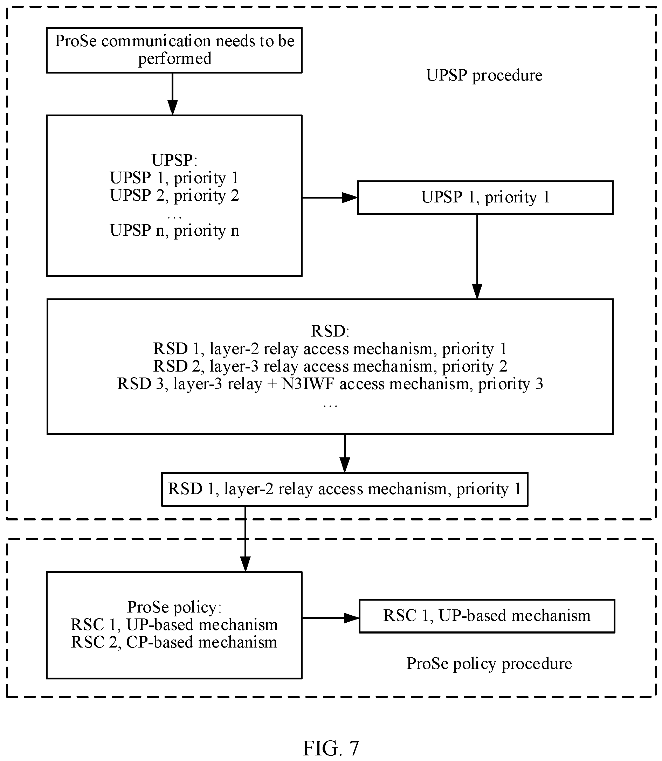

FIG. 7 is a schematic flowchart of determining the PC5 connection mechanism and the access mechanism by a remote end. As shown in FIG. 7, in a descending order of the use priorities of the URSPs, the different URSPs are sequentially a URSP 1, a URSP 2, ..., and a URSP n, where n is an integer greater than 1. When the ProSe communication needs to be performed, the remote UE may preferentially select the URSP 1 to use. Based on a descending order of use priorities of RSDs, different RSDs in the URSP 1 are sequentially an RSD 1, an RSD 2, and an RSD 3. The RSD 1 indicates the layer-2 relay mechanism, the RSD 2 indicates the layer-3 relay mechanism, and the RSD 3 indicates the layer-3 relay + N3IWF mechanism. The remote UE may preferentially select the RSD 1 to use, to be specific, determine that the access mechanism is the layer-2 relay mechanism. The ProSe policy includes the RSC 1 to the RSC 6. The RSC 1 indicates the CP-based mechanism + the layer-2 relay mechanism, the RSC 2 indicates the CP-based mechanism + the layer-3 relay mechanism, the RSC 3 indicates the CP-based mechanism + the layer-3 relay + N3IWF mechanism, the RSC 4 indicates the UP-based mechanism + the layer-2 relay mechanism, the RSC 5 indicates the UP-based mechanism + the layer-3 relay mechanism, and the RSC 6 indicates the UP-based mechanism + the layer-3 relay + N3IWF mechanism. The remote UE may traverse the ProSe policies based on the RSD 1, to determine that the ProSe communication may use a PC5 connection mechanism and an access mechanism that are indicated by the RSC 1 or the RSC 4.

Step 2: The remote UE performs ProSe discovery.

The ProSe discovery is used by the remote UE to discover the relay UE. Two discovery models, namely, a model A (model A) and a model B (model B), of the ProSe discovery are defined in TS 23.304.

In the model A, interacted UEs include an announcing UE (announcing UE) and a monitoring UE (monitoring UE). After obtaining the ProSe parameter, the announcing UE may actively broadcast a discovering request for discovering a specific ProSe service. After obtaining the ProSe parameter, the monitoring UE may actively monitor the discovering request for discovering the specific ProSe service. In this way, after receiving the message that is broadcast by the announcing UE, the monitoring UE may determine whether the ProSe service that is broadcast by the announcing UE meets a requirement of the monitoring UE, to determine whether to continue a subsequent procedure.

The foregoing example continues.

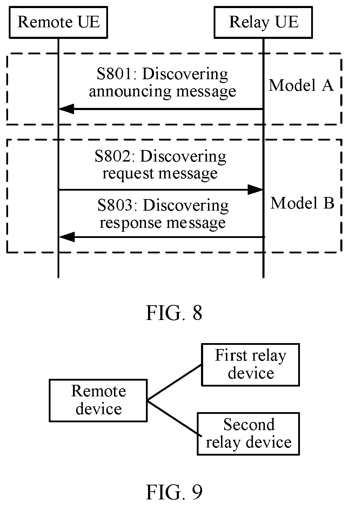

FIG. 8 is a schematic flowchart of the ProSe discovery. As shown in FIG. 8, in the model A, the announcing UE may be the relay UE, and the monitoring UE may be the remote UE. The relay UE may announce a discovering announcing (discovering announcing) message, where the discovering announcing message may include an RSC, for example, the RSC 1 or the RSC 2, supported by the relay UE. After receiving the discovering announcing message, the remote UE may determine whether the RSC 1 or the RSC 2 is an RSC, for example, the RSC 1 or the RSC 4, that is needed by the ProSe communication. If the discovering announcing message carries the RSC 1, the remote UE determines that the RSC 1 is the RSC needed by the ProSe communication, and continues to perform the subsequent procedure. If the discovering announcing message carries the RSC 2, the remote UE determines that the RSC 2 is not the RSC needed by the ProSe communication, and the procedure ends.

In the model B, interacted UEs include a discoverer UE (discoverer UE) and a discoveree UE (discoveree UE). After obtaining the ProSe parameter, the discoverer UE may actively broadcast a discovering request for discovering a specific ProSe service. After obtaining the ProSe parameter, the discoveree UE may actively monitor the discovering request for discovering the specific ProSe service. In this way, after receiving the message that is broadcast by the discoverer UE, the discoveree UE may determine whether the discoveree UE supports the ProSe service of the discoverer UE. If the discoveree UE supports the ProSe service of the discoverer UE, the discoveree UE responds to the message that is broadcast by the discoverer UE; otherwise, the discoveree UE does not respond to the message that is broadcast by the discoverer UE. If the discoverer UE receives a response from the discoveree UE, the discoverer UE continues the subsequent procedure (step 3); otherwise, the procedure ends.

The foregoing example continues.

As shown in FIG. 8, in the model B, the discoveree UE may be the relay UE, and the discoverer UE may be the remote UE. The remote UE may broadcast the discovering request (discovering request) message, where the discovering request message may include an RSC, for example, the RSC 1 or the RSC 4, that is needed by the ProSe communication. After receiving the discovering request message, the relay UE may determine whether the relay UE supports the RSC 1 or the RSC 4. If the relay UE determines that the RSC 1 or the RSC 4 is supported, the relay UE may respond to the remote UE, to send a discovering response (discovering response) message to indicate that the relay UE supports the RSC 1 or the RSC 4. Otherwise, the relay UE does not respond to the remote UE. For the remote UE, if the remote UE receives the discovering response message, the subsequent procedure (step 3) continues; otherwise, the procedure ends.

Step 3: The remote UE establishes the PC5 connection to the relay UE.

The remote UE may establish the PC5 connection to the relay UE by using the foregoing PC5 connection mechanism. For a specific implementation principle, refer to the foregoing related descriptions. Details are not described again.

Step 4: The remote UE communicates with the network through the relay UE.

The remote UE may access the network through the relay UE by using the foregoing access mechanism. For a specific implementation principle, refer to the foregoing related descriptions. Details are not described again.

It can be learned that the foregoing procedure defined in 3GPP mainly relates to how the remote UE accesses the network through the relay UE, but another communication scenario of the remote UE is not considered. As a result, a technical problem may occur in the foregoing procedure. For example, in a relay switching scenario, if the remote UE establishes a PC5 connection to an original relay UE by using the CP-based mechanism before relay switching, and needs to establish a PC5 connection to a new relay UE by using the UP-based mechanism after the relay switching, because the remote UE may not obtain a PC5 root key from the PKMF in advance after the relay switching, or a PC5 root key obtained in advance may expire, the UP-based mechanism cannot be executed, the switching fails, and service continuity cannot be ensured. If the remote UE establishes the PC5 connection to the original relay UE by using the CP-based mechanism before the relay switching, and needs to establish the PC5 connection to the new relay UE by using the UP-based mechanism after the relay switching, the relay UE may need to establish a PDU session to the network. This causes additional signaling exchange and an additional delay, reduces switching efficiency, and cannot ensure the service continuity. Alternatively, if the remote UE establishes a PC5 connection to an original relay UE by using the UP-based mechanism before relay switching, and needs to establish a PC5 connection to a new relay UE by using the CP-based mechanism after the relay switching, the remote UE may need to perform ProSe authentication again. This causes unnecessary signaling exchange, reduces switching efficiency, and cannot ensure service continuity.

For the foregoing technical problem, embodiments of this application provide the following technical solutions, to ensure reliability and efficiency of the relay switching, and therefore ensure the service continuity.

The following describes the technical solutions of this application with reference to the accompanying drawings.

The technical solutions in embodiments of this application may be applied to various communication systems, for example, a wireless fidelity (Wi-Fi) system, a vehicle-to-everything (vehicle-to-everything, V2X) communication system, a device-to-device (device-to-device, D2D) communication system, an internet-of-vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5th generation (5th generation, 5G) system, for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" or "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding/relevant (corresponding, relevant)", and "corresponding (corresponding)" may be interchangeably used sometimes. It should be noted that meanings expressed by the terms are consistent when differences of the terms are not emphasized. In addition, "/" in this application may represent an "or" relationship.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding of embodiments of this application, a communication system shown in FIG. 9 is first used as an example to describe in detail a communication system usable in embodiments of this application. For example, FIG. 9 is a diagram of an architecture of a communication system usable in a communication method according to an embodiment of this application.

As shown in FIG. 9, the communication system may be usable in the foregoing 5GS, and includes a remote device and a plurality of relay devices such as a first relay device and a second relay device.

The remote device may establish a first relay connection to the first relay device by using a first PC5 connection mechanism. When the first relay connection needs to be switched, the remote device may determine priority information of a relay service identifier. The priority information of the relay service identifier may indicate that the first PC5 connection mechanism indicated by the relay service identifier needs to be preferentially used. Alternatively, the remote device may determine a first relay service identifier according to a relay switching policy. The relay switching policy may indicate that when the relay connection needs to be switched, a new relay connection needs to be established by using a PC5 connection mechanism used before relay connection switching. In this way, the remote device establishes a second relay connection to a second relay device based on the priority information or according to the relay switching policy and by using the first PC5 connection mechanism, to ensure relay switching reliability and efficiency.

It may be understood that the remote device may be understood as the foregoing remote UE, and the relay device may be understood as the foregoing relay UE, or may be any other possible device. This is not limited.

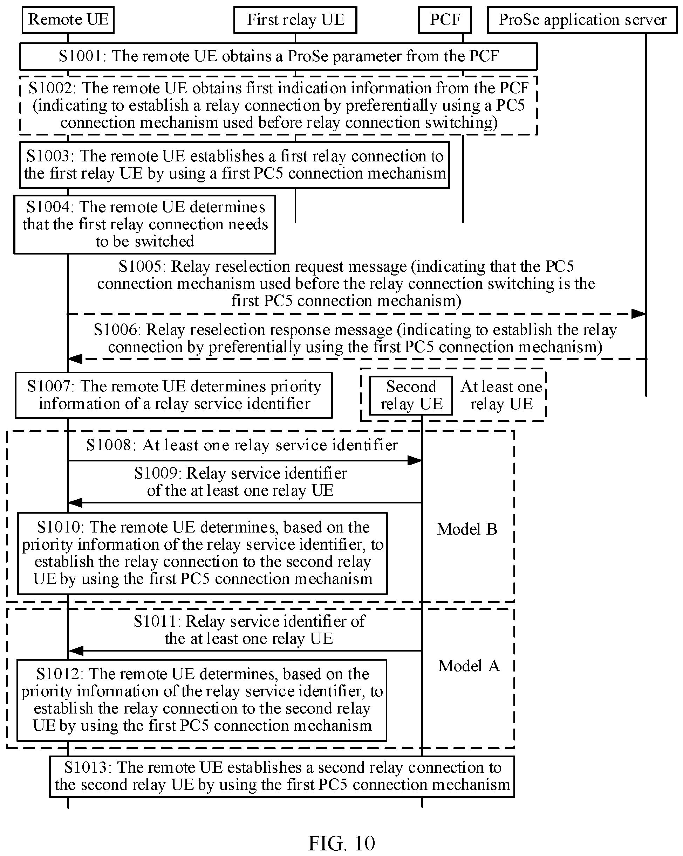

With reference to FIG. 10 to FIG. 12, the following specifically describes an interaction procedure between network elements/devices in the foregoing communication system by using method embodiments. The communication method provided in embodiments of this application may be applied to the foregoing communication system, and is specifically applied to various scenarios in the foregoing communication system. The following provides specific descriptions.

### Scenario 1:

FIG. 10 is a schematic flowchart 1 of a communication method according to an embodiment of this application. The communication method is applicable to the foregoing communication system, and relates to interaction between a remote UE, a first relay UE, a second relay UE, a PCF, and a ProSe application server. In the scenario 1, the remote UE may establish a first relay connection to the first relay UE by using a first PC5 connection mechanism. When the first relay connection needs to be switched, the remote UE may establish a second relay connection to the second relay UE by preferentially using the first PC5 connection mechanism, to ensure relay switching reliability and efficiency, and therefore ensure service continuity.

Specifically, as shown in FIG. 10, a procedure for the communication method is as follows:
S1001: The remote UE obtains a ProSe parameter from the PCF.

The ProSe parameter may include a ProSe communication-related parameter, for example, a ProSe communication-related RSD, in a URSP. The ProSe parameter further includes a ProSe policy. For a specific implementation principle, refer to related descriptions in "3. ProSe communication" above. Details are not described again.

S1002: The remote UE obtains first indication information from the PCF.

The first indication information may indicate to establish a relay connection by preferentially using a PC5 connection mechanism used before relay connection switching. The relay connection may be a connection, for example, a PC5 connection, established between the remote UE and the relay UE, or may be any other possible connection. This is not limited. The PC5 connection mechanism may be a CP-based mechanism, a UP-based mechanism, or any other possible mechanism. This is not limited. The first indication information may be locally configured on the PCF, or may be obtained by the PCF from another network element, for example, a UDR. This is not limited.

The remote UE may obtain the first indication information by reusing the procedure for obtaining the ProSe parameter from the PCF, in other words, S1001 and S1002 may be performed together. For example, when providing the ProSe policy to the remote UE through a UCU procedure for a 5G ProSe policy provisioning request message of the remote UE, the PCF may further provide the first indication information by reusing the UCU procedure. Alternatively, S1001 and S1002 may be performed separately. For example, if the PCF determines that the first indication information in the ProSe parameter for the UE is updated, the PCF may alternatively actively provide the first indication information to the UE.

It may be understood that the first indication information is an example name, and may be replaced with any other possible name, for example, a first fast switching indication or a first fast switching indication. This is not limited.

It may be further understood that S1002 is an optional step. For example, when the relay connection needs to be switched, the remote UE may establish the relay connection by preferentially using, by default, the PC5 connection mechanism used before the relay connection switching (this is denoted as that the remote UE configures a first policy by default). Alternatively, when the remote UE accesses a network by using a layer-2 access mechanism or a layer-3 with non-protocol access mechanism, if the relay connection needs to be switched, the remote UE may establish the relay connection by preferentially using, by default, the PC5 connection mechanism used before the relay connection switching (this is denoted as that the remote UE configures a second policy by default). When the network is accessed by using the layer-2 relay mechanism or the layer-3 relay + N3IWF mechanism, establishment of a PDU session for obtaining a service from the network is requested by the remote UE from the network. Therefore, in this case, fast switching can be implemented by using the PC5 connection mechanism used before the relay connection switching, so that the remote UE can establish a new PDU session by reusing a user-plane resource of the PDU session, to ensure the service continuity.

S1003: The remote UE establishes the first relay connection to the first relay UE by using the first PC5 connection mechanism.

The first PC5 connection mechanism may be the UP-based mechanism or the CP-based mechanism. This is not limited. The UP-based mechanism may also be referred to as a mechanism for obtaining a relay connection key (for example, a root key of a PC5 connection) through a user plane of the network, and the CP-based mechanism may also be referred to as a mechanism for obtaining a relay connection key through a control plane of the network. For a specific implementation principle, refer to related descriptions in "3. ProSe communication" above; or the UP-based mechanism and the CP-based mechanism may be replaced with any possible descriptions. This is not limited.

The network may be a home public land mobile network (home public land mobile network, HPLMN) of the remote UE or a visited public land mobile network (visited public land mobile network, VPLMN) of the remote UE. This is not limited. The service obtained by the remote UE from the network may be some services, for example, an extended reality (extended reality, XR) service, that have high real-time performance and a high data capacity requirement, and may be specifically a virtual reality (virtual reality, VR) service; or may be another service, for example, an audio service. This is not limited.

The remote UE may determine the first PC5 connection mechanism based on the ProSe parameter, for example, the ProSe communication-related RSD, and the ProSe policy, to establish the first relay connection to the first relay UE by using the first PC5 connection mechanism. For a specific implementation principle, refer to related descriptions in "3. ProSe communication" above. Details are not described again. When the remote UE establishes the first relay connection to the first relay UE, the remote UE may access the network through the first relay UE by using a first access mechanism, and obtain a first service, for example, the XR service, or any other possible service from the network. This is not limited. The first access mechanism may be any one of the following: a layer-2 access mechanism, a layer-3 with protocol access mechanism, or a layer-3 with non-protocol access mechanism.

It may be understood that an execution sequence of S1003 and S1002 is not limited.

S1004: The remote UE determines that the first relay connection needs to be switched.

The remote UE may determine, based on a current service status, whether the first relay connection needs to be switched. For example, the remote UE determines that current quality of service of the first relay connection is poor, for example, a current packet loss rate of the service is high and cannot meet a reliability requirement of the service, or a current delay of the service is large and cannot meet a delay requirement of the service, to determine that the first relay connection needs to be switched to obtain the service by establishing a relay connection with better quality of service through switching.

S1005: The remote UE sends a relay reselection request message to the ProSe application server. The ProSe application server receives the relay reselection request message from the remote UE.

The relay reselection request message may indicate that the PC5 connection mechanism used before the relay connection switching is the first PC5 connection mechanism. For example, the relay reselection request message may include an identifier of the remote UE, for example, a GPSI or an application-layer user identifier used by the UE, and a first relay service identifier, for example, an RSC or any other possible identifier. The first relay service identifier may indicate the first PC5 connection mechanism. Optionally, the relay reselection request message may further include an identifier of the first relay UE, to indicate, by using the identifier of the remote UE and the identifier of the first relay UE, that the relay connection established before the relay connection switching is the first relay connection. Optionally, the relay reselection request message may not carry the first relay service identifier, but carries, for example, other identification information indicating the first PC5 connection mechanism. Optionally, the relay reselection request message may further indicate that the relay connection established before the relay connection switching is the first relay connection.

S 1006: The ProSe application server sends a relay reselection response message to the remote UE. The remote UE receives the relay reselection response message from the ProSe application server.

The relay reselection response message may respond to the relay reselection request message. For example, the relay reselection response message may include second indication information, for example, the first relay service identifier, to indicate to establish the relay connection by preferentially using the first PC5 connection mechanism.

It may be understood that the relay reselection response message may alternatively indicate, by not carrying the second indication information, to establish the relay connection by not preferentially using the first PC5 connection mechanism. Alternatively, the ProSe application server may indicate, by not sending the relay reselection response message, to establish the relay connection by not preferentially using the first PC5 connection mechanism when the relay connection needs to be switched.

It may be understood that the second indication information may alternatively be any other possible information element. This is not limited. The second indication information is an example name, and may be replaced with any other possible name, for example, a second fast switching indication or a second fast switching indication. This is not limited.

It may be further understood that S1005 and S1006 are optional steps. For example, if the remote UE obtains the first indication information, or the remote UE configures the first policy or the second policy by default, S1005 and S1006 may not be performed.

S1007: The remote UE determines priority information of a relay service identifier.

The relay service identifier may be at least one relay service identifier (including the first relay service identifier) indicating at least one PC5 connection mechanism (including the first PC5 connection mechanism) for establishing the relay connection, namely, at least one PC5 connection mechanism supported by the remote UE, for example, at least one of the following: the UP-based mechanism or the CP-based mechanism. For example, each of the at least one relay service identifier may indicate one corresponding PC5 connection mechanism. The remote UE may determine the relay service identifier according to the ProSe policy. For example, the remote UE may determine, according to the ProSe policy, the at least one PC5 connection mechanism supported by the remote UE, and determine a corresponding relay service identifier for each of the at least one PC5 connection mechanism, to obtain the at least one relay service identifier. It may be understood that the at least one relay service identifier may also be referred to as a relay service identifier list, a relay service identifier set, or the like. This is not limited.

For ease of understanding, one example is used for description.

The ProSe policy includes the UP-based mechanism and the CP-based mechanism. The remote UE may allocate an RSC-UP to the UP-based mechanism and an RSC-CP to the CP-based mechanism. In this case, the at least one relay service identifier includes the RSC-UP and the RSC-CP. It may be understood that the RSC-UP and the RSC-CP may alternatively be replaced with any other possible expressions. For example, the RSC-UP may be replaced with an RSC 1, and the RSC-CP may be replaced with an RSC 2. This is not limited.

The priority information of the relay service identifier may indicate a respective use priority of the at least one relay service identifier, namely, a respective use priority of the at least one PC5 connection mechanism indicated by the at least one relay service identifier. A PC5 connection mechanism with a higher use priority needs to be preferentially used. In this case, priority information of the first relay service identifier may indicate that the first PC5 connection mechanism indicated by the first relay service identifier needs to be preferentially used, in other words, the first PC5 connection mechanism may have a highest use priority.

In a possible manner, the priority information of the relay service identifier may be explicit information. A mapping relationship may be established between the priority information of the relay service identifier and the at least one relay service identifier, to indicate the respective use priority of the at least one PC5 connection mechanism by using the mapping relationship.

The foregoing example continues.

The priority information of the relay service identifier is sequentially a priority 1 and a priority 2 in descending order of priorities, and the mapping relationship may be enumerated in Table 1.

**Table 1**

| Priority information | Relay service identifier |
|---|---|
| Priority 1 | RSC-UP |
| Priority 2 | RSC-CP |

It can be learned that when the first PC5 connection mechanism is the UP-based mechanism, the mapping relationship may indicate that the priority 1 corresponds to the RSC-UP, and the priority 2 corresponds to the RSC-CP, to be specific, indicate to establish the relay connection by preferentially using the UP-based mechanism, and establish the relay connection by using the CP-based mechanism when the UP-based mechanism cannot be used. It may be understood that the priority information may also be understood as a sequence number of the relay service identifier in the mapping relationship table. For example, the priority 1 is a sequence number 0, and the priority 2 is a sequence number 1.

In another possible manner, the priority information of the relay service identifier may alternatively be implicit information. The priority information of the relay service identifier may be represented by a sequence of the at least one relay service identifier. In other words, the sequence of the at least one relay service identifier may implicitly indicate the respective use priority of the at least one PC5 connection mechanism.

The foregoing example continues.

The priority information of the relay service identifier may be enumerated in Table 2.

**Table 2**

| Relay service identifier |
|---|
| RSC-UP |
| RSC-CP |

It can be learned that, when the first PC5 connection mechanism is the UP-based mechanism, a top-to-bottom sequence of the at least one relay service identifier may indicate a descending order of the use priorities, to be specific, indicate to establish the relay connection by preferentially using the UP-based mechanism, and establish the relay connection by using the CP-based mechanism when the UP-based mechanism cannot be used. It may be understood that, a bottom-to-top sequence of the at least one relay service identifier may alternatively indicate the descending order of the use priorities. This is not limited.

Optionally, the remote UE may determine the priority information of the relay service identifier based on the first indication information. For example, the remote UE may determine the priority of each of the at least one relay service identifier based on the first indication information and that the first PC5 connection mechanism is used before the relay connection switching, to obtain the priority information of the relay service identifier. Alternatively, the remote UE may determine the priority information of the relay service identifier based on the second indication information. For example, the remote UE may determine the priority of each of the at least one relay service identifier based on the second indication information, to obtain the priority information of the relay service identifier. Alternatively, the remote UE may determine the priority information of the relay service identifier according to the first policy. For example, the remote UE may determine the priority of each of the at least one relay service identifier based on the first policy and that the first PC5 connection mechanism is used before the relay connection switching, to obtain the priority information of the relay service identifier. Alternatively, the remote UE may determine the priority information of the relay service identifier according to the second policy. For example, the remote UE may determine the priority of each of the at least one relay service identifier based on the second policy, that the first PC5 connection mechanism is used before the relay connection switching, and that the network is accessed by using the layer-2 relay mechanism or the layer-3 relay + N3IWF mechanism before the relay switching, to obtain the priority information of the relay service identifier.

It may be understood that, after S1007, the remote UE may perform relay UE discovery, where the relay UE discovery may be implemented in the model B, for example, through S1008 to S1010 in the following, or may be implemented in the model A, for example, through S1011 and S1012 in the following. Details are described below.

S1008: The remote UE sends the at least one relay service identifier.

The remote UE may send the at least one relay service identifier (including the first relay service identifier) in a broadcast manner. For example, the remote UE may send at least one discovering request message, and each discovering request message may carry one corresponding relay service identifier in the at least one relay service identifier, to indicate one corresponding PC5 connection mechanism. Alternatively, the remote UE may send one discovering request message, where the discovering request message may carry the at least one relay service identifier, and each relay service identifier may indicate at least one PC5 connection mechanism.

It may be understood that S1008 may be repeatedly performed for a plurality of times, to increase a probability of discovering the relay UE.

S1009: The remote UE receives a relay service identifier of at least one relay UE.

The relay service identifier of the at least one relay UE may indicate at least one PC5 connection mechanism, namely, a PC5 connection mechanism supported by the at least one relay UE. The relay service identifier of the at least one relay device may or may not include a relay service identifier indicating the first PC5 connection mechanism.

Specifically, for a relay UE, after receiving the discovering request message, the relay UE may determine whether the relay UE locally stores the relay service identifier carried in the discovering request message. If the relay UE locally stores the relay service identifier carried in the discovering request message, the relay UE determines that the relay UE supports the PC5 connection mechanism supported by the remote UE, and may choose to feed back, to the remote UE, a relay service identifier corresponding to the PC5 connection mechanism supported by the relay UE, for example, may send a discovering response message carrying the relay service identifier; otherwise, the relay UE may choose not to send the discovering response message to the remote UE. In this way, the remote UE may receive the relay service identifier of the at least one relay UE.

The foregoing example continues.

The remote UE may broadcast a discovering request message 1 and a discovering request message 2, where the discovering request message 1 carries the RSC-UP, and the discovering request message 2 carries the RSC-CP. A relay UE 1 supports the UP-based mechanism. The relay UE 1 may determine, based on the received discovering request message 1 and discovering request message 2, to send a discovering response message 1 to respond to the discovering request 1. The discovering response message 1 may carry the RSC-UP. A relay UE 2 supports the CP-based mechanism, and may determine, based on the received discovering request message 1 and discovering request message 2, to send a discovering response message 2 to respond to the discovering request 2. The discovering response message 2 may carry the RSC-CP. A relay UE 3 supports the CP-based mechanism and the UP-based mechanism, and may send a discovering response message 3 based on the received discovering request message 1 and discovering request message 2. The discovering response message 3 may carry the RSC-CP and the RSC-UP. A relay UE 4 supports the CP-based mechanism and the UP-based mechanism, and may send a discovering response message 4 based on the received discovering request message 1 and discovering request message 2 to respond to the discovering request 1, and send a discovering response message 5 to respond to the discovering request 2. The discovering response message 4 may carry the RSC-UP, and the discovering response message 5 may carry the RSC-CP. In this case, the remote UE may receive six RSCs, including three RSCs-CP and three RSCs-UP.

S1010: The remote UE determines, based on the priority information of the relay service identifier, that the relay connection needs to be established to the second relay UE by using the first PC5 connection mechanism.

The remote UE may determine, based on the priority information of the relay service identifier, a priority of the received relay service identifier of the at least one relay UE, to select a relay service identifier with a highest priority to use.

When the relay service identifier of the at least one relay device includes the relay service identifier indicating the first PC5 connection mechanism, the relay service identifier with the highest priority may be the relay service identifier indicating the first PC5 connection mechanism, and a relay UE corresponding to the relay service identifier indicating the first PC5 connection mechanism may be the second relay UE, in other words, the relay service identifier indicating the first PC5 connection mechanism is a relay service identifier of the second relay UE. In other words, the remote UE may determine, based on the priority information of the first relay service identifier, to establish the relay connection to the second relay UE in the at least one relay UE by using the first PC5 connection mechanism.

It may be understood that, when the relay service identifier of the at least one relay device does not include the relay service identifier indicating the first PC5 connection mechanism, the relay service identifier with the highest priority may be a relay service identifier that is with the highest priority and that indicates another PC5 connection mechanism.

It may be further understood that if there are a plurality of relay service identifiers with the highest priority, the remote UE may select any one of the plurality of relay service identifiers to use, or may select a first received relay service identifier in the plurality of relay service identifiers to use. This is not limited.

The foregoing example continues.

The remote UE may select the three RSCs-UP in the six received RSCs based on the priority of the RSC-UP higher than the priority of the RSC-CP, and further select a first received RSC-UP, for example, the RSC-UP of the relay UE 1, in the three RSCs-UP to use, or may select any one of the three RSCs-UP to use.

It may be further understood that, S1008 to S1010 are a procedure in the model B, and the remote UE may use the model B by default, or may determine, based on another condition, to use the model B. For example, when the relay connection needs to be switched, if the relay connection is to be established by preferentially using the PC5 connection mechanism used before the relay connection switching, the remote UE determines to use the model B.

S1011: The remote UE receives a relay service identifier of at least one relay UE.

The relay service identifier of the at least one relay UE may indicate at least one PC5 connection mechanism, namely, a PC5 connection mechanism supported by the at least one relay UE. For example, each of the at least one relay UE may send a discovering announcing message, where the discovering announcing message may carry a relay service identifier of the relay UE, to indicate a PC5 connection mechanism supported by the relay UE. Correspondingly, the remote UE receives the discovering announcing message from the at least one relay UE, to obtain the relay service identifier of the at least one relay UE.

It may be understood that because the remote UE does not send in advance at least one relay service identifier supported by the remote UE, to be specific, does not indicate a PC5 connection mechanism supported by the remote UE, in this case, the PC5 connection mechanism indicated by the relay service identifier of the at least one relay UE may or may not include the PC5 connection mechanism supported by the remote UE.

The foregoing example continues.

A relay UE 1 supports the UP-based mechanism, and may announce a discovering announcing message 1, where the discovering announcing message 1 may carry the RSC-UP. A relay UE 2 supports the CP-based mechanism, and may announce a discovering announcing message 2, where the discovering announcing message 2 may carry the RSC-CP. A relay UE 3 supports the CP-based mechanism and the UP-based mechanism, and may announce a discovering announcing message 3, where the discovering announcing message 3 may carry the RSC-CP and the RSC-UP. A relay UE 4 supports the CP-based mechanism and the UP-based mechanism, and may announce a discovering announcing message 4 and a discovering announcing message 5, where the discovering announcing message 3 may carry the RSC-UP, and the discovering announcing message 3 may carry the RSC-CP. In this case, the remote UE may receive six RSCs, including three RSCs-CP and three RSCs-UP.

S1012: The remote UE determines, based on the priority information of the relay service identifier, to establish the relay connection to the second relay UE by using the first PC5 connection mechanism.

The remote UE may determine, based on the at least one local relay service identifier (for example, in S 1007), whether the relay service identifier of the at least one relay UE includes a relay service identifier in the at least one relay service identifier. If the relay service identifier of the at least one relay UE does not include the relay service identifier in the at least one relay service identifier, the remote UE may perform processing based on existing logic. If the relay service identifier of the at least one relay UE includes the relay service identifier in the at least one relay service identifier, the remote UE may mark the relay service identifier in the at least one relay service identifier based on the priority information of the relay service identifier, to select a relay service identifier with a highest priority to use. For a specific implementation principle, refer to related descriptions in S1010. Details are not described again.

The foregoing example continues.

The remote UE may determine, based on the RSC-UP and the RSC-CP included in the at least one relay service identifier, that the six received RSCs all belong to the at least one relay service identifier. The remote UE may select the three RSCs-UP in the six received RSCs based on the priority of the RSC-UP is higher than the priority of the RSC-CP, and further select a first received RSC-UP, for example, the RSC-UP of the relay UE 1, in the two RSCs-UP to use, or may select any one of the two RSCs-UP to use.

It may be understood that S1011 and S1012 are a procedure in the model A, and the remote UE may use the model A by default. Alternatively, the remote UE may determine, based on another condition, to use the model A. For example, when the relay connection needs to be switched, if the relay connection is to be established by preferentially using the PC5 connection mechanism used before the relay connection switching, the remote UE determines to use the model A. Alternatively, the remote UE may randomly select the model A or the model B.

S1013: The remote UE establishes the second relay connection to the second relay UE by using the first PC5 connection mechanism.

For a specific implementation principle of S1013, refer to related descriptions in "3. ProSe communication" above. Details are not described again.

### Scenario 2:

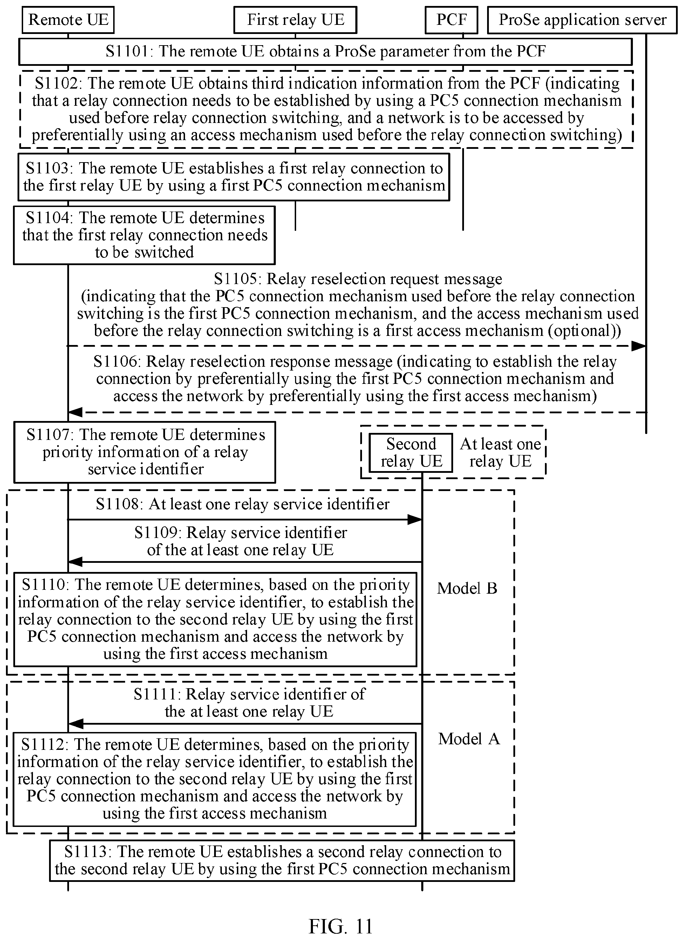

FIG. 11 is a schematic flowchart 2 of a communication method according to an embodiment of this application. The communication method is applicable to the foregoing communication system, and relates to interaction between a remote UE, a first relay UE, a second relay UE, a PCF, and a ProSe application server. In the scenario 2, the remote UE may establish a first relay connection to the first relay UE by using a first PC5 connection mechanism, and access a first network through the first relay UE by using a first access mechanism. When the first relay connection needs to be switched, the remote UE may establish a second relay connection to the second relay UE by preferentially using the first PC5 connection mechanism, and access the first network through the first relay UE by preferentially using the first access mechanism, to ensure relay switching reliability and efficiency, and therefore ensure service continuity.

Specifically, as shown in FIG. 11, a procedure for the communication method is as follows:
S1101: The remote UE obtains a ProSe parameter from the PCF.

The ProSe parameter may include a ProSe communication-related parameter, for example, a ProSe communication-related RSD, in a URSP. The ProSe parameter further includes a ProSe policy. For a specific implementation principle, refer to related descriptions in "3. ProSe communication" above. Details are not described again.

S1102: The remote UE obtains third indication information from the PCF.

The third indication information may indicate to: establish the relay connection by preferentially using a PC5 connection mechanism used before relay connection switching, and access the network by preferentially using an access mechanism used before the relay connection switching. For specific implementation principles of the relay connection and the PC5 connection mechanism, refer to related descriptions of S1002. Details are not described again. The access mechanism may be a mechanism used by the remote UE to access the network through the relay UE, and includes, for example, at least one of the following: a layer-2 relay mechanism, a layer-3 relay mechanism, or a layer-3 relay + N3IWF mechanism. The third indication information may be locally configured on the PCF, or may be obtained by the PCF from another network element, for example, a UDR. This is not limited.

The remote UE may obtain the third indication information by reusing a procedure for obtaining the ProSe parameter from the PCF, in other words, S1101 and S1102 may be performed together. For example, when providing the ProSe policy to the remote UE through a UCU procedure for a 5G ProSe policy provisioning request message of the remote UE, the PCF may further provide the third indication information by reusing the UCU procedure. Alternatively, S1101 and S1102 may be performed separately. For example, if the PCF determines that the third indication information in the ProSe parameter for the UE is updated, the PCF may alternatively actively provide the third indication information to the UE.

It may be understood that the third indication information is an example name, and may be replaced with any other possible name, for example, a third fast switching indication or a third fast switching indication. This is not limited.

It may be further understood that S1102 is an optional step. For example, when the relay connection needs to be switched, the remote UE may establish the relay connection by preferentially using, by default, the PC5 connection mechanism used before the relay connection switching, and access the network by preferentially using the access mechanism used before the relay connection switching (this is denoted as that the remote UE configures a third policy by default). Alternatively, when the remote UE accesses the network by using the layer-2 relay mechanism or the layer-3 relay + N3IWF mechanism, if the relay connection needs to be switched, the remote UE may establish the relay connection by preferentially using, by default, the PC5 connection mechanism used before the relay connection switching, and access the network by preferentially using, by default, the access mechanism used before the relay connection switching (this is denoted as that the remote UE configures a fourth policy by default).

S1103: The remote UE establishes the first relay connection to the first relay UE by using the first PC5 connection mechanism.

S1104: The remote UE determines that the first relay connection needs to be switched.

For a specific implementation principle of S1103 and S1104, refer to related descriptions of S1003 and S1004. Details are not described again.

S1105: The remote UE sends a relay reselection request message to the ProSe application server. The ProSe application server receives the relay reselection request message from the remote UE.

The relay reselection request message may indicate that the PC5 connection mechanism used before the relay connection switching is the first PC5 connection mechanism, and optionally, may further indicate that the relay connection established before the relay connection switching is the first relay connection. For a specific implementation principle, refer to related descriptions of S1005. Details are not described again.

Optionally, the relay reselection request message may further indicate that the access mechanism used before the relay connection switching is the first access mechanism. The first access mechanism may be used by the remote UE to access the network. For example, when the remote UE establishes the first relay connection to the first relay UE, the remote UE may access the first network through the first relay UE by using the first access mechanism, to obtain a service, for example, an XR service, or any other possible service from the first network. This is not limited. The first access mechanism may be any one of the following: the layer-2 relay mechanism, the layer-3 relay mechanism, or the layer-3 relay + N3IWF mechanism.

The relay reselection request message may indicate, by reusing a first relay service identifier in the relay reselection request message, that the access mechanism used before the relay connection switching is the first access mechanism. In this way, overheads can be reduced. Alternatively, another information element, for example, an identifier of the first access mechanism, may indicate that the access mechanism used before the relay connection switching is the first access mechanism, to improve indication flexibility. This is not limited.

S1106: The ProSe application server sends a relay reselection response message to the remote UE. The remote UE receives the relay reselection response message from the ProSe application server.

The relay reselection response message may respond to the relay reselection request message. For example, the relay reselection response message may include fourth indication information, for example, the first relay service identifier, to indicate to establish the relay connection by preferentially using the first PC5 connection mechanism and access the network by preferentially using the first access mechanism.

It may be understood that the establishing the relay connection by preferentially using the first PC5 connection mechanism and accessing the network by preferentially using the first access mechanism is an example, and constitutes no limitation. In some scenarios, the relay reselection response message may alternatively indicate, by carrying other indication information, to establish the relay connection by not preferentially using the first PC5 connection mechanism and/or access the network by not preferentially using the first access mechanism. For example, the other indication information may be a relay service identifier specially indicating the first PC5 connection mechanism, to indicate to establish the relay connection by preferentially using the first PC5 connection mechanism and access the network by not preferentially using the first access mechanism. For another example, the other indication information may alternatively be a relay service identifier specially indicating the first access mechanism, to indicate to access the network by preferentially using the first access mechanism and establish the relay connection by not preferentially using the first PC5 connection mechanism. Alternatively, the relay reselection response message may indicate, by not carrying any indication information, to establish the relay connection by not preferentially using the first PC5 connection mechanism and access the network by not preferentially using the first access mechanism.

It may be understood that the fourth indication information may alternatively be any other possible information element. This is not limited. The fourth indication information is an example name, and may be replaced with any other possible name, for example, a fourth fast switching indication or a fourth fast switching indication. This is not limited.

It may be further understood that S1105 and S1006 are optional steps. For example, if the remote UE obtains the third indication information, or the remote UE configures the fourth policy or the fourth policy by default, S1105 and S1106 may not be performed.

S1107: The remote UE determines priority information of a relay service identifier.

The relay service identifier may be at least one relay service identifier (including the first relay service identifier), may indicate at least one PC5 connection mechanism (including the first PC5 connection mechanism) that is for establishing the relay connection and that includes, for example, at least one of the following: a UP-based mechanism or a CP-based mechanism, and may further indicate at least one access mechanism that is for accessing the network and that includes, for example, at least one of the following: the layer-2 relay mechanism, the layer-3 relay mechanism, or the layer-3 relay + N3IWF mechanism. For example, each relay service identifier may indicate one corresponding PC5 connection mechanism and one corresponding access mechanism. The remote UE may determine the at least one relay service identifier based on the ProSe policy and the ProSe communication-related parameter in the URSP. For example, the remote UE may determine, according to the ProSe policy, the at least one PC5 connection mechanism supported by the remote UE, and determine, based on the ProSe communication-related parameter, for example, the ProSe communication-related RSD, that is in the URSP, the at least one access mechanism supported by the remote UE. The remote UE may allocate one relay service identifier to each combination of the at least one access mechanism and the at least one PC5 connection mechanism, to obtain the at least one relay service identifier.

For ease of understanding, one example is used for description.

The ProSe policy includes the UP-based mechanism and the CP-based mechanism. The ProSe communication-related RSD includes an RSD 1, an RSD 2, and an RSD 3. The RSD 1 indicates the layer-2 relay mechanism, the RSD 2 indicates the layer-3 relay mechanism, and the RSD 3 indicates the layer-3 relay + N3IWF mechanism. In this case, there are six combinations of the access mechanism and the PC5 connection mechanism, including: a combination 1 (the UP-based mechanism and the layer-2 relay mechanism), a combination 2 (the UP-based mechanism and the layer-3 relay mechanism), a combination 3 (the UP-based mechanism and the layer-3 relay + N3IWF mechanism), a combination 4 (the CP-based mechanism and the layer-2 relay mechanism), a combination 5 (the CP-based mechanism and the layer-3 relay mechanism), and a combination 6 (the CP-based mechanism and the layer-3 relay + N3IWF mechanism). The remote UE allocates respective corresponding RSCs to the six combinations. For example, the remote UE allocates an RSC-UP-1 to the combination 1, an RSC-UP-2 to the combination 2, an RSC-UP-3 to the combination 3, an RSC-CP-1 to the combination 4, an RSC-CP-2 to the combination 5, and an RSC-CP-3 to the combination 4. In this case, the at least one relay service identifier includes: the RSC-UP-1, the RSC-UP-2, the RSC-UP-3, the RSC-CP-1, the RSC-CP-2, and the RSC-CP-3.

It may be understood that the RSC-UP-1, the RSC-UP-2, the RSC-UP-3, the RSC-CP-1, the RSC-CP-2, and the RSC-CP-3 may alternatively be replaced with any other possible expressions. For example, the RSC-UP-1 may be replaced with an RSC 1, the RSC-UP-2 may be replaced with an RSC 2, the RSC-UP-3 may be replaced with an RSC 3, the RSC-CP-1 may be replaced with an RSC 4, the RSC-CP-2 may be replaced with an RSC 5, and the RSC-CP-3 may be replaced with an RSC 6. This is not limited.

The priority information of the relay service identifier may indicate a respective use priority of the at least one relay service identifier, namely, a respective use priority of the at least one PC5 connection mechanism indicated by the at least one relay service identifier and a respective use priority of the at least one access mechanism indicated by the at least one relay service identifier. A PC5 connection mechanism and an access mechanism that have higher priorities need to be preferentially used. To be specific, for respective use priorities of the combinations of the at least one PC5 connection mechanism and the at least one access mechanism, a combination with a higher use priority needs to be preferentially used. In this case, priority information of the first relay service identifier may indicate that the first PC5 connection mechanism and the first access mechanism that are indicated by the first relay service identifier need to be preferentially used, in other words, a combination of the first PC5 connection mechanism and the first access mechanism may have a highest use priority.

In a possible manner, the priority information of the relay service identifier may be explicit information. A mapping relationship may be established between the priority information of the relay service identifier and the at least one relay service identifier, to indicate the respective use priorities of the combinations of the at least one PC5 connection mechanism and the at least one access mechanism by using the mapping relationship.

The foregoing example continues.

The priority information of the relay service identifier is sequentially a priority 1 to a priority 6 in descending order of the priorities, and the mapping relationship may be enumerated in Table 3.

**Table 3**

| Priority information | Relay service identifier |
|---|---|
| Priority 1 | RSC-UP-1 |
| Priority 2 | RSC-UP-2 |
| Priority 3 | RSC-UP-3 |
| Priority 4 | RSC-CP-1 |
| Priority 5 | RSC-CP-2 |
| Priority 6 | RSC-CP-3 |

It can be learned that when the first PC5 connection mechanism is the UP-based mechanism, the mapping relationship may indicate that the priority 1 corresponds to the RSC-UP-1, the priority 2 corresponds to the RSC-UP-2, and the priority 3 corresponds to the RSC-UP-3, to be specific, indicate to establish the relay connection by preferentially using the UP-based mechanism, and sequentially use the layer-2 relay mechanism, the layer-3 relay mechanism, or the layer-3 relay + N3IWF mechanism in descending order of the priorities on the basis of using the UP-based mechanism. In addition, the mapping relationship may further indicate that the priority 4 corresponds to the RSC-CP-1, the priority 5 corresponds to the RSC-CP-2, and the priority 6 corresponds to the RSC-CP-3, to be specific, indicate to establish the relay connection by using the CP-based mechanism when the UP-based mechanism cannot be used, and sequentially use the layer-2 relay mechanism, the layer-3 relay mechanism, or the layer-3 relay + N3IWF mechanism in descending order of the priorities on the basis of using the CP-based mechanism.

It may be understood that the priority information may also be understood as a sequence number of the relay service identifier in the mapping relationship table. For example, the priority 1 is a sequence number 0, and the priority 2 is a sequence number 1. The rest can be deduced by analogy.

In another possible manner, the priority information of the relay service identifier may alternatively be implicit information, and may be represented by a sequence of the at least one relay service identifier. In other words, the sequence of the at least one relay service identifier may implicitly indicate the respective use priorities of the combinations of the at least one PCS connection mechanism and the at least one access mechanism.

The foregoing example continues.

The at least one relay service identifier may be enumerated in Table 4.

**Table 4**

| Relay service identifier |
|---|
| RSC-UP-1 |
| RSC-UP-2 |
| RSC-UP-3 |
| RSC-CP-1 |
| RSC-CP-2 |
| RSC-CP-3 |

It can be learned that, when the first PCS connection mechanism is the UP-based mechanism, a top-to-bottom sequence of the at least one relay service identifier may indicate a descending order of the use priorities. For a meaning of the descending order of the priorities, refer to related descriptions in Table 3. Details are not described again. It may be understood that, a bottom-to-top sequence of the at least one relay service identifier may alternatively indicate the descending order of the use priorities. This is not limited.

Optionally, the remote UE may determine the priority information of the relay service identifier based on the first indication information. For example, the remote UE may determine the priority of each of the at least one relay service identifier based on the first indication information, that the first PCS connection mechanism is used before the relay connection switching, and that the network is established and accessed by using the first access mechanism before the relay connection switching, to obtain the priority information of the relay service identifier. Alternatively, the remote UE may determine the priority information of the relay service identifier based on the second indication information. For example, the remote UE may determine the priority of each of the at least one relay service identifier based on the second indication information, to obtain the priority information of the relay service identifier. Alternatively, the remote UE may determine the priority information of the relay service identifier according to the first policy. For example, the remote UE may determine the priority of each of the at least one relay service identifier based on the first policy, that the first PCS connection mechanism is used before the relay connection switching, and that the network is established and accessed by using the first access mechanism before the relay connection switching, to obtain the priority information of the relay service identifier. Alternatively, the remote UE may determine the priority information of the relay service identifier according to the second policy. For example, the remote UE may determine the priority of each of the at least one relay service identifier based on the second policy, that the first PC5 connection mechanism is used before the relay connection switching, and that the network is accessed by using the layer-2 relay mechanism or the layer-3 relay+ N3IWF mechanism before the relay switching, to obtain the priority information of the relay service identifier.

In this case, a priority of the relay service identifier indicating the first PC5 connection mechanism may be higher than a priority of a relay service identifier indicating another PCS connection mechanism. Based on this, priorities of a plurality of relay service identifiers indicating a same PCS connection mechanism may be determined based on access mechanisms indicated by the plurality of relay service identifiers. In this case, a priority of the relay service identifier indicating the first access mechanism may be higher than a priority of a relay service identifier indicating another access mechanism. In other words, in the at least one relay service identifier, a priority of a relay service identifier indicating the first PC5 connection mechanism and the first access mechanism may be the highest.

It may be understood that, after S1107, the remote UE may perform relay UE discovery, where the relay UE discovery may be implemented in the model B, for example, through S1108 to S1110 in the following, or may be implemented in the model A, for example, through S1111 and S1112 in the following. Details are described below.

S1108: The remote UE sends the at least one relay service identifier.

The remote UE may send the at least one relay service identifier (including the first relay service identifier) in a broadcast manner. For example, the remote UE may send at least one discovering request message, and each discovering request message may carry one corresponding relay service identifier in the at least one relay service identifier, to indicate one corresponding PCS connection mechanism and one corresponding access mechanism. Alternatively, the remote UE may send one discovering request message, where the discovering request message may carry the at least one relay service identifier, and each relay service identifier may indicate at least one PCS connection mechanism and at least one access mechanism.

It may be understood that S1108 may be repeatedly performed for a plurality of times, to increase a probability of discovering the relay UE.

S1109: The remote UE receives a relay service identifier of at least one relay UE.

The relay service identifier of the at least one relay UE may indicate at least one combination of a PCS connection mechanism and an access mechanism, namely, a PC5 connection mechanism and an access mechanism that are supported by the at least one relay UE. The relay service identifier of the at least one relay device may or may not include the relay service identifier indicating the first PCS connection mechanism and the first access mechanism.

Specifically, for a relay UE, after receiving the discovering request message, the relay UE may determine whether the relay UE locally stores the relay service identifier carried in the discovering request message. If the relay UE locally stores the relay service identifier carried in the discovering request message, the relay UE determines that the relay UE supports the PCS connection mechanism and the access mechanism that are supported by the remote UE, and may choose to feed back, to the remote UE, a relay service identifier corresponding to the PCS connection mechanism and the access mechanism that are supported by the relay UE, for example, may send a discovering response message carrying the relay service identifier; otherwise, the relay UE may choose not to send the discovering response message to the remote UE. In this way, the remote UE may receive the relay service identifier of the at least one relay UE.

The foregoing example continues.

The remote UE may broadcast a discovering request message 1 to a discovering request message 6. The discovering request message 1 carries the RSC-UP-1, the discovering request message 2 carries the RSC-UP-2, the discovering request message 3 carries the RSC-UP-3, the discovering request message 4 carries the RSC-CP-1, the discovering request message 5 carries the RSC-CP-2, and the discovering request message 6 carries the RSC-CP-3. A relay UE 1 supports the UP-based mechanism and the layer-2 relay mechanism. The relay UE 1 may determine, based on the received discovering request message 1, to send a discovering response message 1 carrying the RSC-UP-1, to respond to the discovering request 1. The relay UE 1 does not respond to the discovering request message 2 to the discovering request message 6. A relay UE 2 supports the CP-based mechanism and the layer-2 relay mechanism. The relay UE 2 may determine, based on the received discovering request message 4, to send a discovering response message 2 carrying the RSC-CP, to respond to the discovering request 4. The relay UE 2 does not respond to the discovering request message 1 to the discovering request message, the discovering request message 5, and the discovering request message 6. A relay UE 3 supports the CP-based mechanism, the UP-based mechanism, and the layer-2 relay mechanism. The relay UE 3 may determine, based on the received discovering request message 1 and discovering request message 4, to send a discovering response message 3 carrying the RSC-CP-1 and the RSC-UP-1, to respond to the discovering request 1 and the discovering request 4. The relay UE 3 does not respond to the discovering request message 2, the discovering request message 3, the discovering request message 5, and the discovering request message 6. A relay UE 4 supports the CP-based mechanism, the UP-based mechanism, and the layer-2 relay mechanism. The relay UE 4 may determine, based on the received discovering request message 1 and discovering request message 4, to send a discovering response message 4 carrying the RSC-UP-1 to respond to the discovering request 1, and to send a discovering response message 5 carrying the RSC-CP-1 to respond to the discovering request 4. In this case, the remote UE may receive six RSCs, including three RSCs-CP-1 and three RSCs-UP-1.

S1110: The remote UE determines, based on the priority information of the relay service identifier, to establish the relay connection to the second relay UE by using the first PC5 connection mechanism and access the network by using the first access mechanism.

The remote UE may determine, based on the priority information of the relay service identifier, a priority of the received relay service identifier of the at least one relay UE, to select a relay service identifier with a highest priority to use.

When the relay service identifier of the at least one relay device includes the relay service identifier indicating the first PC5 connection mechanism and the first access mechanism, the relay service identifier with the highest priority may be the relay service identifier indicating the first PC5 connection mechanism and the first access mechanism. In this case, the relay service identifier indicating the first PCS connection mechanism and the first access mechanism is a relay service identifier of the second relay UE. In other words, the remote UE may determine, based on the priority information of the first relay service identifier, to establish the relay connection to the second relay UE in the at least one relay UE by using the first PC5 connection mechanism.

It may be understood that, when the relay service identifier of the at least one relay device does not include the relay service identifier indicating the first PC5 connection mechanism and the first access mechanism, if the relay service identifier of the at least one relay device includes the relay service identifier indicating the first PC5 connection mechanism, the relay service identifier with the highest priority may be a relay service identifier that is in the relay service identifier indicating the first PCS connection mechanism and that indicates an access mechanism with a highest priority. Alternatively, if the relay service identifier of the at least one relay device includes neither the relay service identifier indicating the first PCS connection mechanism nor the relay service identifier indicating the first PCS connection mechanism, the relay service identifier with the highest priority may be a relay service identifier indicating another PCS connection mechanism and another access mechanism that have highest priorities.

It may be further understood that if there are a plurality of relay service identifiers with the highest priority, the remote UE may select any one of the plurality of relay service identifiers to use, or may select a first received relay service identifier in the plurality of relay service identifiers to use. This is not limited.

The foregoing example continues.

The remote UE may select the three RSCs-UP-1 in the six received RSCs based on the priority of the RSC-UP-1 higher than the priority of the RSC-CP-1, and further select a first received RSC-UP-1, for example, the RSC-UP-1 of the relay UE 1, in the three RSCs-UP-1 to use, or may select any one of the three RSCs-UP-1 to use.

It may be further understood that, S1108 to S1110 are a procedure in the model B, and the remote UE may use the model B by default, or may determine, based on another condition, to use the model B. For example, when the relay connection needs to be switched, if the relay connection is to be established by preferentially using the PCS connection mechanism used before the relay connection switching, the remote UE determines to use the model B. For another example, when the relay connection needs to be switched, if the relay connection is to be established by preferentially using the PCS connection mechanism used before the relay connection switching, and the network is to be accessed by preferentially using the access mechanism used before the relay connection switching, the remote UE determines to use the model B.

S1111: The remote UE receives a relay service identifier of at least one relay UE.

The relay service identifier of the at least one relay UE may indicate at least one PCS connection mechanism and at least one access mechanism, namely, a PC5 connection mechanism and an access mechanism that are supported by the at least one relay UE. For example, each of the at least one relay UE may send a discovering announcing message, where the discovering announcing message may carry a relay service identifier of the relay UE, to indicate a PCS connection mechanism and an access mechanism that are supported by the relay UE. Correspondingly, the remote UE receives the discovering announcing message from the at least one relay UE, to obtain the relay service identifier of the at least one relay UE.

It may be understood that because the remote UE does not send in advance at least one relay service identifier supported by the remote UE (for example, in S1107), to be specific, does not indicate a PCS connection mechanism and an access mechanism that are supported by the remote UE, in this case, the PCS connection mechanism indicated by the relay service identifier of the at least one relay UE may or may not include the PC5 connection mechanism and the access mechanism that are supported by the remote UE.

The foregoing example continues.

A relay UE 1 supports the UP-based mechanism and the layer-2 relay mechanism, and may announce a discovering announcing message 1, where the discovering announcing message 1 may carry the RSC-UP-1. A relay UE 2 supports the CP-based mechanism and the layer-2 relay mechanism, and may announce a discovering announcing message 2, where the discovering announcing message 2 may carry the RSC-CP-1. A relay UE 3 supports the CP-based mechanism, the UP-based mechanism, and the layer-2 relay mechanism, and may announce a discovering announcing message 3, where the discovering announcing message 3 may carry the RSC-CP-1 and the RSC-UP-1. A relay UE 4 supports the CP-based mechanism and the UP-based mechanism, and may announce a discovering announcing message 4 and a discovering announcing message 5, where the discovering announcing message 3 may carry the RSC-UP, and the discovering announcing message 3 may carry the RSC-CP. In this case, the remote UE receives six RSCs, including three RSCs-CP-1 and three RSCs-UP-1.

S 1112: The remote UE determines, based on the priority information of the relay service identifier, to establish the relay connection to the second relay UE by using the first PC5 connection mechanism and access the network by using the first access mechanism.

The remote UE may determine, based on the at least one local relay service identifier (for example, in S1107), whether the relay service identifier of the at least one relay UE includes a relay service identifier in the at least one relay service identifier. If the relay service identifier of the at least one relay UE does not include the relay service identifier in the at least one relay service identifier, the remote UE may perform processing based on existing logic. If the relay service identifier of the at least one relay UE includes the relay service identifier in the at least one relay service identifier, the remote UE may mark the relay service identifier in the at least one relay service identifier based on the priority information of the relay service identifier, to select a relay service identifier with a highest priority to use. For a specific implementation principle, refer to related descriptions in S1110. Details are not described again.

The foregoing example continues.

The remote UE may determine, based on the RSC-UP-1 to the RSC-UP-3 and the RSC-CP-1 to the RSC-CP-3 included in the at least one relay service identifier, that the six received RSCs all belong to the at least one relay service identifier. The remote UE may select the three RSCs-UP-1 in the six received RSCs based on the priority of the RSC-UP-1 higher than the priority of the RSC-CP-1, and further select a first received RSC-UP-1, for example, the RSC-UP-1 of the relay UE 1, in the three RSCs-UP-1 to use, or may select any one of the three RSCs-UP-1 to use.

It may be understood that S1111 and S1112 are a procedure in the model A, and the remote UE may use the model A by default. Alternatively, the remote UE may determine, based on another condition, to use the model A. For example, when the relay connection needs to be switched, if the relay connection is to be established by preferentially using the PCS connection mechanism used before the relay connection switching, the remote UE determines to use the model A. For another example, when the relay connection needs to be switched, if the relay connection is to be established by preferentially using the PC5 connection mechanism used before the relay connection switching, and the network is to be accessed by preferentially using the access mechanism used before the relay connection switching, the remote UE determines to use the model A. Alternatively, the remote UE may randomly select the model A or the model B.

In addition, for a specific implementation principle of S1112, refer to related descriptions of S1110. Details are not described again.

S1113: The remote UE establishes the second relay connection to the second relay UE by using the first PC5 connection mechanism.

When the remote UE establishes the second relay connection to the second relay UE, the remote UE may access the first network through the second relay UE by using the first access mechanism, to obtain the service, for example, the XR service, or any other possible service from the first network. This is not limited.

It may be understood that, for a specific implementation principle of S1113, refer to related descriptions in "3. ProSe communication" above. Details are not described again.

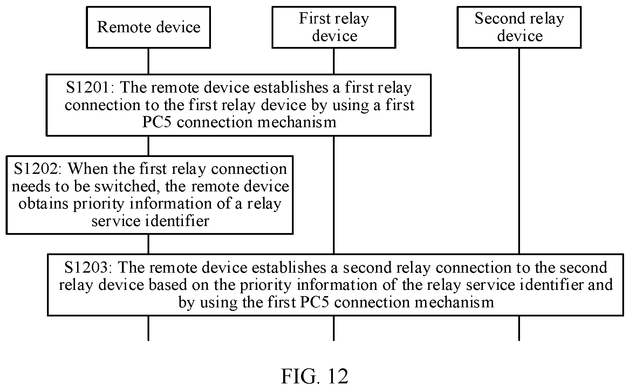

With reference to FIG. 10 and FIG. 11, the foregoing describes in detail specific procedures for the communication method provided in embodiments of this application in the scenario 1 and the scenario 2. The following specifically describes an overall procedure for the communication method in the scenario 1 and the scenario 2 with reference to FIG. 12.

FIG. 12 is a schematic flowchart 3 of a communication method according to an embodiment of this application. The communication method is applicable to the foregoing communication system, and mainly relates to interaction between a remote device (for example, a remote UE), a first relay device (for example, a first relay UE), and a second relay device (for example, a second relay UE).

Specifically, as shown in FIG. 12, a procedure for the communication method is as follows:
S1201: The remote device establishes a first relay connection to the first relay device by using a first PCS connection mechanism.

The first PC5 connection mechanism may include a mechanism for obtaining a relay connection key through a user plane of a network, namely, a user plane based mechanism, or a mechanism for obtaining a relay connection key through a control plane of the network, namely, a control plane based mechanism. The first relay connection may be used by the remote device to obtain a first service from the network through the first relay device. For example, the remote device may access the network through the first relay connection by using a first access mechanism in at least one access mechanism, to obtain the first service of the network. Optionally, the at least one access mechanism may include at least one of the following: a layer-2 access mechanism, a layer-3 with protocol access mechanism, or a layer-3 with non-protocol access mechanism, so that the remote device can flexibly access the network.

In addition, for a specific implementation principle of S1201, refer to related descriptions of S1001 and S1003. Details are not described again.

S1202: When the first relay connection needs to be switched, the remote device obtains priority information of a first relay service identifier.

The priority information of the first relay service identifier may indicate that the first PCS connection mechanism indicated by the first relay service identifier needs to be preferentially used. For a specific implementation principle, refer to related descriptions of S1004 and S1007. Details are not described again. Optionally, the priority information of the first relay service identifier may further indicate that the first access mechanism in the at least one access mechanism for accessing the network is preferentially used. For a specific implementation principle, refer to related descriptions of S1104 and S1107. Details are not described again.

S1203: The remote device establishes a second relay connection to the second relay device based on the priority information of the first relay service identifier and by using the first PCS connection mechanism.

The second relay device may be a relay device that supports the first PC5 connection mechanism, namely, a relay device corresponding to the relay service identifier indicating the first PCS connection mechanism. The second relay connection may be used by the remote device to obtain the first service of the network through the second relay device.

Manner 1: The first PC5 connection mechanism indicated by the relay service identifier needs to be preferentially used.

The remote device may determine, based on the priority information of the first relay service identifier, to establish the relay connection to the second relay device by using the first PCS connection mechanism, in other words, discover the second relay device that supports the first PC5 connection mechanism, to ensure that the remote device can establish the second relay connection to the second relay device by using the first PCS connection mechanism.

For example, the remote device may broadcast the first relay service identifier, to receive a relay service identifier of at least one relay device. The relay service identifier of the at least one relay device includes a relay service identifier indicating the first PCS connection mechanism. In this way, the remote device may determine, based on the priority information of the first relay service identifier, to establish the relay connection to the second relay device in the at least one relay device by using the first PCS connection mechanism. The second relay device is a relay device corresponding to the relay service identifier indicating the first PC5 connection mechanism. It can be learned that the remote device may actively broadcast the relay service identifier to discover the relay device, for example, the second relay device, that supports the first PC5 connection mechanism, to increase a relay discovery probability.

For another example, the remote device may receive a relay service identifier of at least one relay device. The relay service identifier of the at least one relay device includes a relay service identifier indicating the first PC5 connection mechanism. In this way, the remote device may determine, based on the priority information of the first relay service identifier, to establish the relay connection to the second relay device in the at least one relay device by using the first PCS connection mechanism. The second relay device is a relay device corresponding to the relay service identifier indicating the first PC5 connection mechanism. It can be learned that the remote device may alternatively passively receive the relay service identifier to discover the relay device, for example, the second relay device, that supports the first PCS connection mechanism, to avoid communication overheads caused by actively broadcasting the relay service identifier.

It may be understood that, for a specific implementation principle of the manner 1, refer to related descriptions of S1008 to S1013. Details are not described again.

Manner 2: The first PC5 connection mechanism indicated by the relay service identifier needs to be preferentially used, and the first access mechanism in the at least one access mechanism for accessing the network needs to be preferentially used.

The remote device may determine, based on the priority information of the first relay service identifier, to establish the relay connection to the second relay device by using the first PCS connection mechanism, and access the network by using the first access mechanism, to establish the second relay connection to the second relay device by using the first PCS connection mechanism. In addition, the remote device may further access the network through the second relay device by using the first access mechanism. It can be learned that when the remote device has accessed the network by using the first access mechanism, if the remote device expects to switch the relay connection, the remote device may continue to access the network by preferentially reusing an access mechanism used before relay connection switching, namely, the first access mechanism, to further ensure service continuity.

For example, the remote device may broadcast the first relay service identifier, to receive a relay service identifier of at least one relay device. The relay service identifier of the at least one relay device includes a relay service identifier indicating the first PCS connection mechanism and the first access mechanism. In this way, the remote device may determine, based on the priority information of the first relay service identifier, to establish the relay connection to the second relay device in the at least one relay device by using the first PC5 connection mechanism and access the network by using the first access mechanism. The second relay device is a relay device corresponding to the relay service identifier indicating the first PC5 connection mechanism and the first access mechanism. It can be learned that the remote device may actively broadcast the relay service identifier to discover the relay device, for example, the second relay device, that supports the first PC5 connection mechanism and the first access mechanism, to increase a relay discovery probability.

For another example, the remote device may receive a relay service identifier of at least one relay device. The relay service identifier of the at least one relay device includes a relay service identifier indicating the first PCS connection mechanism and the first access mechanism. In this way, the remote device may determine, based on the priority information of the first relay service identifier, to establish the relay connection to the second relay device in the at least one relay device by using the first PC5 connection mechanism and access the network by using the first access mechanism. The second relay device is a relay device corresponding to the relay service identifier indicating the first PCS connection mechanism and the first access mechanism. It can be learned that the remote device may alternatively passively receive the relay service identifier to discover the relay device, for example, the second relay device, that supports the first PCS connection mechanism and the first access mechanism, to avoid communication overheads caused by actively broadcasting the relay service identifier.

It may be understood that for a specific implementation principle of the manner 2, refer to related descriptions of S1108 to S1113. Details are not described again.

In conclusion, when the remote device has established the first relay connection to the first relay device by using the first PCS connection mechanism, for example, the user plane based mechanism or the control plane based mechanism, if the remote device expects to switch the relay connection, the remote device may establish the second relay connection to the second relay device by preferentially reusing a connection mechanism used before the relay connection switching, namely, the first PC5 connection mechanism, to improve PC5 connection switching efficiency, reduce a switching delay, and ensure continuity of the first service obtained by the remote device from the network.

In a possible design solution, with reference to the foregoing manner 1, the remote device may determine the priority information of the first relay service identifier based on first indication information from a policy control network element. The first indication information may indicate to establish the relay connection by preferentially using the connection mechanism used before relay connection switching. In other words, in addition to establishing the relay connection by preferentially using, by default, a connection mechanism used before relay connection switching, the remote device may alternatively flexibly determine, based on the indication of the policy control network element, whether to establish the relay connection by preferentially using the connection mechanism used before the relay connection switching, to meet relay switching requirements of different services.

Alternatively, the remote device may determine the priority information of the first relay service identifier based on second indication information from a relay server, where the second indication information indicates to establish the relay connection by preferentially using the first PCS connection mechanism. In other words, in addition to establishing the relay connection by preferentially using, by default, a connection mechanism used before relay connection switching, the remote device may alternatively flexibly determine, based on the indication of the relay server, whether to establish the relay connection by preferentially using the first PCS connection mechanism, to achieve applicability to different switching scenarios.

Specifically, the remote device sends a relay reselection request message to the relay server, where the relay reselection request message indicates that the connection mechanism used before the relay connection switching is the first PCS connection mechanism. The remote device receives a relay reselection response message returned by the relay server for the relay reselection request message, where the relay reselection response message carries the second indication information. In other words, the remote device may obtain the indication of the relay server by reusing a relay reselection procedure, to reduce implementation difficulty. Alternatively, the remote device may obtain the indication of the relay server through a newly defined procedure. This is not limited.

Alternatively, the remote device may determine the priority information of the first relay service identifier based on the first access mechanism. The first access mechanism is a mechanism used by the remote device to access the network through the first relay device. For example, the first access mechanism may be either of the following mechanisms: the layer-2 access mechanism and the layer-3 with non-protocol access mechanism. It may be understood that when the remote device accesses the network by using the layer-2 access mechanism or the layer-3 with non-protocol access mechanism, the remote device may establish a session between the remote device and the network, to obtain the first service from the network. Based on this, if the remote device implements fast switching by preferentially reusing the connection mechanism used before the relay connection switching, the remote device may further continue to reuse the session before the session becomes invalid, to continue to obtain the first service from the network. This can ensure the service continuity.

It may be understood that for a specific implementation principle of the design solution, refer to related descriptions of S 1002, S 1005, and S 1006. Details are not described again.

In a possible design solution, with reference to the foregoing manner 2, the remote device may determine the priority information of the first relay service identifier based on third indication information from a policy control network element. The third indication information may indicate to: establish the relay connection by preferentially using the connection mechanism used before the relay connection switching, and access the network by preferentially using the access mechanism used before the relay connection switching. In other words, the remote device may flexibly determine, based on the indication of the policy control network element, whether to establish the relay connection by preferentially using the connection mechanism used before the relay connection switching and whether to establish and access the network by preferentially using the access mechanism used before the relay connection switching, to meet relay switching requirements of different services.

Alternatively, the remote device may determine the priority information of the first relay service identifier based on fourth indication information from a relay server. The fourth indication information may indicate to: establish the relay connection by preferentially using the first PCS connection mechanism, and access the network by preferentially using the first access mechanism. In other words, in addition to establishing the relay connection by preferentially using, by default, the connection mechanism used before the relay connection switching, the remote device may alternatively flexibly determine, based on the indication of the relay server, whether to establish the relay connection by preferentially using the first PC5 connection mechanism and whether to establish and access the network by preferentially using the access mechanism used before the relay connection switching, to achieve applicability to different switching scenarios.

Specifically, the remote device may send a relay reselection request message to the relay server. The relay reselection request message indicates that the connection mechanism used before the relay connection switching is the first PC5 connection mechanism, and the access mechanism used before the relay connection switching is the first access mechanism. The remote device receives a relay reselection response message returned by the relay server for the relay reselection request message. The relay reselection response message carries the fourth indication information. In other words, the remote device may obtain the indication of the relay server by reusing a relay reselection procedure, to reduce implementation difficulty. Alternatively, the remote device may obtain the indication of the relay server through a newly defined procedure. This is not limited.

Alternatively, the remote device may determine the priority information of the first relay service identifier based on the first access mechanism. For example, the first access mechanism is either of the following mechanisms: the layer-2 access mechanism and the layer-3 with non-protocol access mechanism. It may be understood that when the remote device accesses the network by using the layer-2 access mechanism or the layer-3 with non-protocol access mechanism, the remote device may establish a session between the remote device and the network, to obtain the first service from the network. Based on this, if the remote device implements fast switching by preferentially reusing the connection mechanism used before the relay connection switching, the remote device may further reuse the session, to continue to obtain the first service from the network. This can ensure service continuity.

It may be understood that for a specific implementation principle of the design solution, refer to related descriptions of S1102, S1105, and S1106. Details are not described again.

It may be understood that the procedure shown in FIG. 11 mainly describes the following process: The remote device first establishes the first relay connection to the first relay device, and then switches to establishing the second relay connection to the second relay device. This process may also be understood as follows: The remote device switches from a state of establishing the relay connection to the first relay device to a state of establishing the relay connection to the second relay device, in other words, the remote device switches from a state of being connected to the first relay device to a state of being connected to the second relay device.

### Scenario 3:

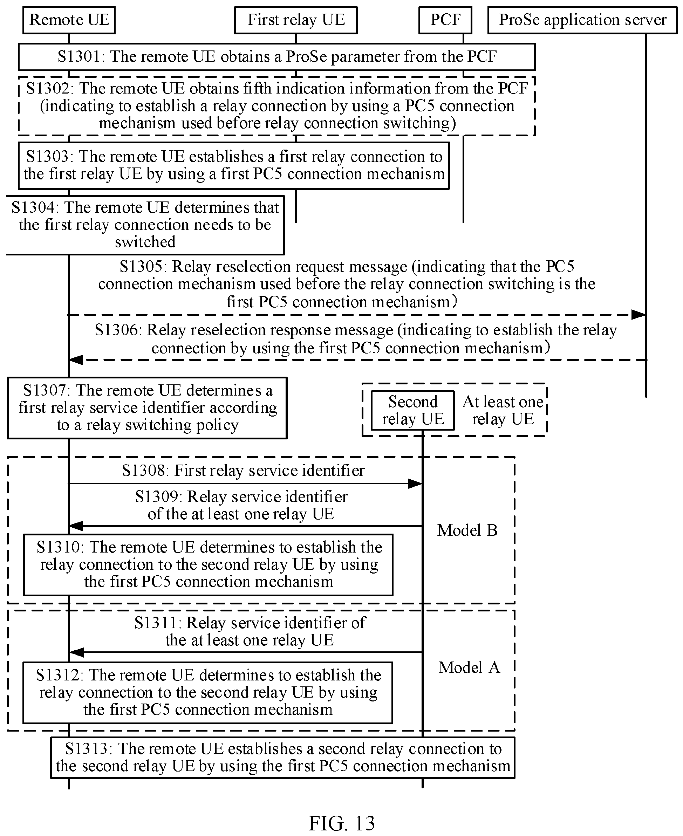

FIG. 13 is a schematic flowchart 4 of a communication method according to an embodiment of this application. The communication method is applicable to the foregoing communication system, and relates to interaction between a remote UE, a first relay UE, a second relay UE, a PCF, and a ProSe application server. In the scenario 3, the remote UE may establish a first relay connection to the first relay UE by using a first PC5 connection mechanism. When the first relay connection needs to be switched, the remote UE may establish a second relay connection to the second relay UE by using the first PCS connection mechanism, to ensure relay switching reliability and efficiency, and therefore ensure service continuity.

Specifically, as shown in FIG. 13, a procedure for the communication method is as follows:
S1301: The remote UE obtains a ProSe parameter from the PCF.

The ProSe parameter may include a ProSe communication-related parameter, for example, a ProSe communication-related RSD, in a URSP. The ProSe parameter further includes a ProSe policy. For a specific implementation principle, refer to related descriptions in "3. ProSe communication" above. Details are not described again.

S1302: The remote UE obtains fifth indication information from the PCF.

The fifth indication information may indicate to establish the relay connection by using a PCS connection mechanism used before relay connection switching. For specific implementation principles of the relay connection and the PC5 connection mechanism, refer to related descriptions of S1002. Details are not described again.

The remote UE may obtain the fifth indication information by reusing the procedure for obtaining the ProSe parameter from the PCF, in other words, S1301 and S1302 may be performed together. For example, when providing the ProSe policy to the remote UE through a UCU procedure for a 5G ProSe policy provisioning request message of the remote UE, the PCF may further provide the fifth indication information by reusing the UCU procedure. Alternatively, S1301 and S1302 may be performed separately. For example, if the PCF determines that the fifth indication information in the ProSe parameter for the UE is updated, the PCF may alternatively actively provide the fifth indication information to the UE.

The remote UE may determine a relay switching policy based on the fifth indication information, for example, determine the relay switching policy based on the indication of the fifth indication information. The relay switching policy may indicate to: when the relay connection needs to be switched, establish the relay connection by using the PC5 connection mechanism used before the relay connection switching; or when a network is accessed by using a layer-2 relay mechanism or a layer-3 relay + N3IWF mechanism, if the relay connection needs to be switched, establish the relay connection by using the PCS connection mechanism used before the relay connection switching.

It may be understood that the fifth indication information is an example name, and may be replaced with any other possible name, for example, a fifth fast switching indication or a fifth fast switching indication. This is not limited. In addition, S1302 is an optional step. For example, the remote UE may alternatively configure the relay switching policy by default.

S1303: The remote UE establishes the first relay connection to the first relay UE by using the first PC5 connection mechanism.

S1304: The remote UE determines that the first relay connection needs to be switched.

S1305: The remote UE sends a relay reselection request message to the ProSe application server. The ProSe application server receives the relay reselection request message from the remote UE.

For a specific implementation principle of S1303 to S1305, refer to related descriptions of S1003 to S1005. Details are not described again.

S1306: The ProSe application server sends a relay reselection response message to the remote UE. The remote UE receives the relay reselection response message from the ProSe application server.

The relay reselection response message may respond to the relay reselection request message. For example, the relay reselection response message may include the relay switching policy, to indicate to establish the relay connection by using the first PC5 connection mechanism.

It may be understood that when the relay connection needs to be switched, that the remote UE determines, according to the relay switching policy in the relay reselection response message, to establish the relay connection by using the first PC5 connection mechanism is an example, and constitutes no limitation. Alternatively, the relay reselection response message may indicate, by not carrying the relay switching policy, to establish the relay connection without using the first PCS connection mechanism. Alternatively, the ProSe application server may indicate, by not sending the relay reselection response message, to establish the relay connection without using the first PC5 connection mechanism. Optionally, the relay reselection response message may further carry another relay switching policy, and the another relay switching policy may indicate to establish the relay connection by using another PC5 connection mechanism different from the first PCS connection mechanism.

It may be further understood that S1305 and S1306 are optional steps. For example, the remote UE configures the relay switching policy by default, and S1305 and S1306 may not be performed.

S1307: The remote UE determines a first relay service identifier according to the relay switching policy.

The first relay service identifier (for example, a first RSC) may indicate the first PCS connection mechanism.

In a possible manner, the relay switching policy may indicate to: when the relay connection needs to be switched, establish the relay connection by using the PCS connection mechanism used before the relay connection switching. Based on this, the remote UE may determine, based on the indication of the relay switching policy, that the first PCS connection mechanism is used before the relay connection switching, to determine the first relay service identifier, for example, determine the first relay service identifier corresponding to the first PCS connection mechanism.

In another possible manner, the relay switching policy may indicate to: when the network is accessed by using the layer-2 relay mechanism or the layer-3 relay + N3IWF mechanism, if the relay connection needs to be switched, establish the relay connection by using the PCS connection mechanism used before the relay connection switching. Based on this, the remote UE may determine, based on the indication of the relay switching policy, whether the network is accessed by using the layer-2 relay mechanism or the layer-3 relay + N3IWF mechanism before the relay connection switching. If the network is accessed without using the layer-2 relay mechanism or the layer-3 relay + N3IWF mechanism, the remote UE performs processing based on existing logic. If the network is accessed by using the layer-2 relay mechanism or the layer-3 relay + N3IWF mechanism, the remote UE may determine, based on the indication of the relay switching policy, that the first PC5 connection mechanism is used before the relay connection switching, to determine the first relay service identifier indicating the first PCS connection mechanism.

It may be understood that, after S1307, the remote UE may perform relay UE discovery, where the relay UE discovery may be implemented in the model B, for example, through S1308 to S1310 in the following, or may be implemented in the model A, for example, S1311 and S1312 in the following. Details are described below.

S 1308: The remote UE sends the first relay service identifier.

The remote UE may send the first relay service identifier in a broadcast manner. For example, the remote UE may send a discovering request message that carries the first relay service identifier, to indicate the first PC5 connection mechanism.

It may be understood that S 1308 may be repeatedly performed for a plurality of times, to increase a probability of discovering the relay UE.

S 1309: The remote UE receives a relay service identifier of at least one relay UE.

The relay service identifier of the at least one relay UE may indicate at least one PCS connection mechanism, namely, a PC5 connection mechanism supported by the at least one relay UE. The relay service identifier of the at least one relay device may include a relay service identifier indicating the first PC5 connection mechanism.

Specifically, for a relay UE, after receiving the discovering request message, the relay UE may determine, based on the first relay service identifier carried in the discovering request message, whether the relay UE locally stores the relay service identifier indicating the first PCS connection mechanism. If the relay UE locally stores the relay service identifier indicating the first PC5 connection mechanism, the relay UE determines that the relay UE supports the first PCS connection mechanism supported by the remote UE, and may choose to perform feedback to the remote UE, for example, send a discovering response message carrying the relay service identifier indicating the first PC5 connection mechanism; otherwise, the relay UE may choose not to perform feedback to the remote UE. In this way, the remote UE may receive the relay service identifier of the at least one relay UE.

The foregoing example continues.

The remote UE may broadcast the discovering request message, where the discovering request message carries an RSC-UP, to indicate that the remote UE supports a UP-based mechanism. A relay UE 1 supports the UP-based mechanism, and may send, based on the received discovering request message, a discovering response message 1 that carries the RSC-UP. A relay UE 2 supports a CP-based mechanism, and therefore may not respond to the discovering request message. A relay UE 3 supports the CP-based mechanism and the UP-based mechanism, and may send, based on the received discovering request message, a discovering response message 2 that carries the RSC-UP. In this case, the remote UE may receive two RSCs, including two RSCs-UP.

S1310: The remote UE determines to establish the relay connection to the second relay UE by using the first PC5 connection mechanism.

The remote UE may determine, based on the first relay service identifier, to establish the relay connection to the second relay UE in the at least one relay UE. For example, the remote UE may determine, based on the first relay service identifier, that the at least one relay UE supports the first PCS connection mechanism, to determine the second relay UE from the at least one relay UE. For example, the at least one relay UE is one relay UE, and the remote UE may determine that the relay UE is the second relay UE. For another example, the at least one relay UE is a plurality of relay UEs, and the remote UE may determine that any relay UE in the plurality of relay UEs is the second relay UE or a relay UE whose discovering response message is first received is the second relay UE, or the remote UE may select a relay UE with best signal quality in the plurality of relay UEs as the second relay UE.

The foregoing example continues.

For the two received RSCs-UP, the remote UE may select a first received RSC-UP, for example, the RSC-UP of the relay UE 1, in the two RSCs-UP to use, to determine to establish the relay connection to the relay UE 1 by using the UP-based mechanism; or may select either of the two RSCs-UP to use. This is not limited.

It may be understood that, S1308 to S1310 are a procedure in the model B, and the remote UE may use the model B by default, or may determine, based on another condition, to use the model B. For example, when the relay connection needs to be switched, if the relay connection is to be established by using the PC5 connection mechanism used before the relay connection switching, the remote UE determines to use the model B.

S1311: The remote UE receives a relay service identifier of at least one relay UE.

For a specific implementation principle of S1311, refer to related descriptions of S1011. Details are not described again.

S1312: The remote UE determines to establish the relay connection to the second relay UE by using the first PC5 connection mechanism.

The remote UE may determine, based on the first relay service identifier, whether the relay service identifier of the at least one relay UE includes a relay service identifier indicating the first PCS connection mechanism. If the relay service identifier of the at least one relay UE does not include the relay service identifier indicating the first PC5 connection mechanism, the remote UE may perform processing based on existing logic. If the relay service identifier of the at least one relay UE includes the relay service identifier indicating the first PCS connection mechanism, the remote UE may determine, based on that a relay UE corresponding to the relay service identifier indicating the first PC5 connection mechanism is determined as the second relay UE, to establish the relay connection to the second relay UE by using the first PCS connection mechanism. For a specific implementation principle, refer to related descriptions of S1310. Details are not described again.

It may be understood that S1311 and S1312 are a procedure in the model A, and the remote UE may use the model A by default. Alternatively, the remote UE may determine, based on another condition, to use the model A. For example, when the relay connection needs to be switched, if the relay connection is to be established by using the PCS connection mechanism used before the relay connection switching, the remote UE determines to use the model A. Alternatively, the remote UE may randomly select the model A or the model B.

S1313: The remote UE establishes the second relay connection to the second relay UE by using the first PC5 connection mechanism.

It may be understood that for a specific implementation principle of S1313, refer to related descriptions of S1013. Details are not described again.

### Scenario 4:

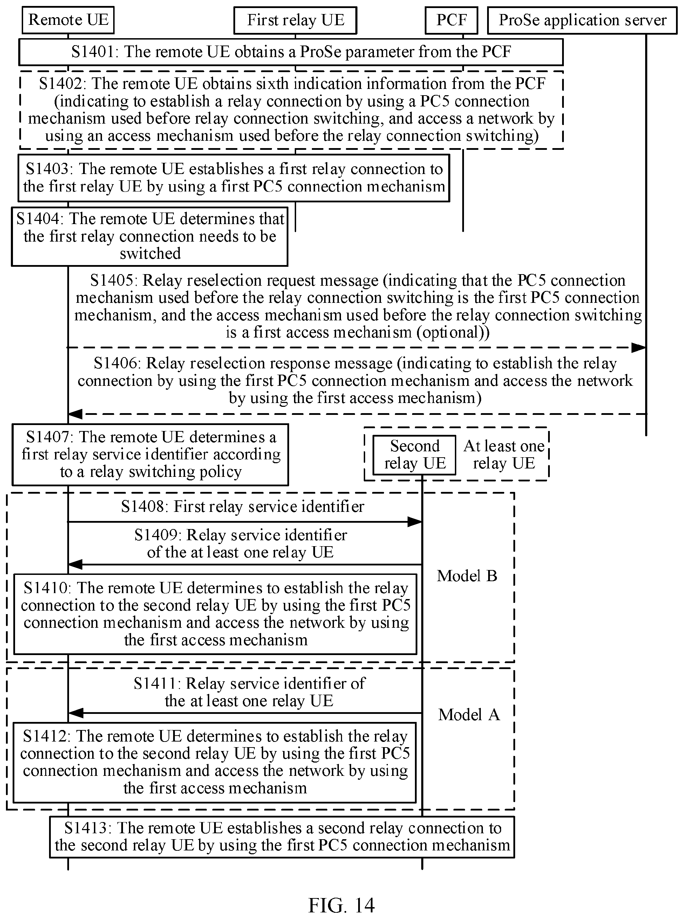

FIG. 14 is a schematic flowchart 5 of a communication method according to an embodiment of this application. The communication method is applicable to the foregoing communication system, and relates to interaction between a remote UE, a first relay UE, a second relay UE, a PCF, and a ProSe application server. In the scenario 4, the remote UE may establish a first relay connection to the first relay UE by using a first PCS connection mechanism, and access a first network through the first relay UE by using a first access mechanism. When the first relay connection needs to be switched, the remote UE may establish a second relay connection to the second relay UE by using the first PC5 connection mechanism to, and access the first network through the first relay UE by using the first access mechanism, to ensure relay switching reliability and efficiency, and therefore ensure service continuity.

Specifically, as shown in FIG. 14, a procedure for the communication method is as follows:
S1401: The remote UE obtains a ProSe parameter from the PCF.

The ProSe parameter may include a ProSe communication-related parameter, for example, a ProSe communication-related RSD, in a URSP. The ProSe parameter further includes a ProSe policy. For a specific implementation principle, refer to related descriptions in "3. ProSe communication" above. Details are not described again.

S1402: The remote UE obtains sixth indication information from the PCF.

The sixth indication information may indicate to: establish the relay connection by using a PCS connection mechanism used before relay connection switching, and access the network by using an access mechanism used before the relay connection switching. For specific implementation principles of the relay connection and the PC5 connection mechanism, refer to related descriptions of S1002. Details are not described again. For a specific implementation principle of the access mechanism, refer to related descriptions of S1102. Details are not described again.

The remote UE may obtain the sixth indication information by reusing the procedure for obtaining the ProSe parameter from the PCF, in other words, S1401 and S1402 may be performed together. For example, when providing a ProSe policy to the remote UE through a UCU procedure for a 5G ProSe policy provisioning request message of the remote UE, the PCF may further provide the sixth indication information by reusing the UCU procedure. Alternatively, S1401 and S1402 may be performed separately. For example, if the PCF determines that the sixth indication information in the ProSe parameter for the UE is updated, the PCF may alternatively actively provide the sixth indication information to the UE.

The remote UE may determine a relay switching policy based on the sixth indication information, for example, determine the relay switching policy based on the indication of the sixth indication information. The relay switching policy may indicate to: establish the relay connection by using the PCS connection mechanism used before the relay connection switching, and access the network by using the access mechanism used before the relay connection switching; or when the network is accessed by using a layer-2 relay mechanism or a layer-3 relay + N3IWF mechanism, establish the relay connection by using the PCS connection mechanism used before the relay connection switching, and access the network by using the access mechanism used before the relay connection switching.

It may be understood that the sixth indication information is an example name, and may be replaced with any other possible name, for example, a sixth fast switching indication or a sixth fast switching indication. This is not limited. In addition, S1402 is an optional step. For example, the remote UE may alternatively configure the relay switching policy by default.

S1403: The remote UE establishes the first relay connection to the first relay UE by using the first PC5 connection mechanism.

S1404: The remote UE determines that the first relay connection needs to be switched.

S1405: The remote UE sends a relay reselection request message to the ProSe application server. The ProSe application server receives the relay reselection request message from the remote UE.

For a specific implementation principle of S1403 and S1404, refer to related descriptions of S1003 and S1004. For a specific implementation principle of S1405, refer to related descriptions of S1105. Details are not described again.

S1406: The ProSe application server sends a relay reselection response message to the remote UE. The remote UE receives the relay reselection response message from the ProSe application server.

The relay reselection response message may respond to the relay reselection request message. For example, the relay reselection response message may include the relay switching policy, to indicate to: when the relay connection needs to be switched, establish the relay connection by using the first PC5 connection mechanism, and access the network by using the first access mechanism.

It may be understood that when the relay connection needs to be switched, the establishing the relay connection by using the first PCS connection mechanism and access the network by using the first access mechanism is an example, and constitutes no limitation. Alternatively, the relay reselection response message may indicate, by carrying other indication information: when the relay connection needs to be switched, to establish the relay connection without using the first PC5 connection mechanism, and/or access the network without using the first access mechanism. For example, the other indication information may be a relay service identifier specially indicating the first PCS connection mechanism, to indicate to establish the relay connection by using the first PC5 connection mechanism and access the network without using the first access mechanism. For another example, the other indication information may alternatively be a relay service identifier specially indicating the first access mechanism, to indicate to access the network by using the first access mechanism and establish the relay connection without using the first PC5 connection mechanism. Alternatively, the relay reselection response message may indicate, by not carrying any indication information, to establish the relay connection without using the first PCS connection mechanism and access the network without using the first access mechanism. Alternatively, the relay reselection response message may carry another relay switching policy, and the another relay switching policy may indicate to establish the relay connection by using another PC5 connection mechanism different from the first PC5 connection mechanism, and access the network by using another access mechanism different from the first access mechanism.

It may be further understood that S1405 and S 1406 are optional steps. For example, the remote UE configures the relay switching policy by default, and S1405 and S1406 may not be performed.

S 1407: The remote UE determines a first relay service identifier according to the relay switching policy.

The first relay service identifier (for example, a first RSC) may indicate the first PCS connection mechanism and the first access mechanism.

In a possible manner, the relay switching policy may indicate to: when the relay connection needs to be switched, establish the relay connection by using the PCS connection mechanism used before the relay connection switching, and access the network by using the access mechanism used before the relay connection switching. Based on this, the remote UE may determine, based on the indication of the relay switching policy, that the first PCS connection mechanism and the first access mechanism are used before the relay connection switching, to determine the first relay service identifier, for example, determine the first relay service identifier corresponding to the first PC5 connection mechanism and the first access mechanism.

In another possible manner, the relay switching policy may indicate to: when the network is accessed by using the layer-2 relay mechanism or the layer-3 relay + N3IWF mechanism, if the relay connection needs to be switched, establish the relay connection by using the PCS connection mechanism used before the relay connection switching, and access the network by using the access mechanism used before the relay connection switching. Based on this, the remote UE may determine, based on the indication of the relay switching policy, whether the network is accessed by using the layer-2 relay mechanism or the layer-3 relay + N3IWF mechanism before the relay connection switching, in other words, determine whether the first PC5 connection mechanism is the layer-2 relay mechanism or the layer-3 relay + N3IWF mechanism. If the first PC5 connection mechanism is not the layer-2 relay mechanism or the layer-3 relay + N3IWF mechanism, the remote UE performs processing based on existing logic. If the first PCS connection mechanism is the layer-2 relay mechanism or the layer-3 relay + N3IWF mechanism, the remote UE may determine, based on the indication of the relay switching policy, that the first PCS connection mechanism is used before the relay connection switching, to determine the first relay service identifier, for example, determine the first relay service identifier corresponding to the first PCS connection mechanism and the first access mechanism.

It may be understood that, after S1407, the remote UE may perform relay UE discovery, where the relay UE discovery may be implemented in the model B, for example, through S1408 to S1410 in the following, or may be implemented in the model A, for example, through S1411 and S1412 in the following. Details are described below.

S1408: The remote UE sends the first relay service identifier.

The remote UE may send the first relay service identifier in a broadcast manner. For example, the remote UE may send a discovering request message that carries the first relay service identifier, to indicate the first PC5 connection mechanism and the first access mechanism.

It may be understood that S1408 may be repeatedly performed for a plurality of times, to increase a probability of discovering the relay UE.

S1409: The remote UE receives a relay service identifier of at least one relay UE.

The relay service identifier of the at least one relay UE may indicate at least one PCS connection mechanism and at least one access mechanism, namely, a PC5 connection mechanism and an access mechanism that are supported by the at least one relay UE. The relay service identifier of the at least one relay device may include a relay service identifier indicating the first PC5 connection mechanism and the first access mechanism.

Specifically, for a relay UE, after receiving the discovering request message, the relay UE may determine, based on the first relay service identifier carried in the discovering request message, whether the relay UE locally stores the relay service identifier indicating the first PCS connection mechanism and the first access mechanism. If the relay UE locally stores the relay service identifier indicating the first PC5 connection mechanism and the first access mechanism, the relay UE determines that the relay UE supports the first PC5 connection mechanism and the first access mechanism that are supported by the remote UE, and may choose to perform feedback to the remote UE, for example, send a discovering response message carrying the relay service identifier indicating the first PCS connection mechanism and the first access mechanism; otherwise, the relay UE may choose not to perform feedback to the remote UE. In this way, the remote UE may receive the relay service identifier of the at least one relay UE.

The foregoing example continues.

The remote UE may broadcast the discovering request message, where the discovering request message carries an RSC-UP-1, to indicate that the remote UE supports a UP-based mechanism and the layer-2 relay mechanism. A relay UE 1 supports the UP-based mechanism and the layer-2 relay mechanism. The relay UE 1 may send, based on the received discovering request message, a discovering response message 1 carrying the RSC-UP-1. A relay UE 2 supports a CP-based mechanism and the layer-2 relay mechanism, and therefore may not respond to the discovering request message. A relay UE 3 supports the CP-based mechanism, the UP-based mechanism, and the layer-2 relay mechanism. The relay UE 3 may send, based on the received discovering request message, a discovering response message 2 carrying the RSC-UP-1. In this case, the remote UE may receive two RSCs, including two RSCs-UP-1.

S1410: The remote UE determines to establish the relay connection to the second relay UE by using the first PCS connection mechanism and access the network by using the first access mechanism.

The remote UE may determine, based on the first relay service identifier, to establish the relay connection to the second relay UE in the at least one relay UE. For example, the remote UE may determine, based on the first relay service identifier, that the at least one relay UE all supports the first PCS connection mechanism and the first access mechanism, to determine the second relay UE from the at least one relay UE. A specific implementation principle is similar to that in related descriptions of S1310. For details, refer to the related descriptions for understanding, and the details are not described again.

It may be understood that, S1408 to S1410 are a procedure in the model B, and the remote UE may use the model B by default, or may determine, based on another condition, to use the model B. For example, when the relay connection needs to be switched, if the relay connection is to be established by using the PC5 connection mechanism used before the relay connection switching, and the network is to be accessed by using the access mechanism used before the relay connection switching, the remote UE determines to use the model B.

S1411: The remote UE receives a relay service identifier of at least one relay UE.

For a specific implementation principle of S1411, refer to related descriptions of S1111. Details are not described again.

S1412: The remote UE determines to establish the relay connection to the second relay UE in the at least one relay UE by using the first PC5 connection mechanism and access the network by using the first access mechanism.

The remote UE may determine, based on the first relay service identifier, whether the relay service identifier of the at least one relay UE includes the first relay service identifier. If the relay service identifier of the at least one relay UE does not include the first relay service identifier, the remote UE may perform processing based on existing logic. If the relay service identifier of the at least one relay UE includes the first relay service identifier, the remote UE may determine, based on that a relay UE corresponding to the first relay service identifier is determined as the second relay UE, to establish the relay connection to the second relay UE in the at least one relay UE by using the first PCS connection mechanism, and access the network by using the first access mechanism. A specific implementation principle is similar to that in related descriptions of S1310. For details, refer to the related descriptions for understanding, and the details are not described again.

It may be understood that S1411 and S1412 are a procedure in the model A, and the remote UE may use the model A by default. Alternatively, the remote UE may determine, based on another condition, to use the model A. For example, when the relay connection needs to be switched, if the relay connection is to be established by using the PCS connection mechanism used before the relay connection switching, and the network is to be accessed by using the access mechanism used before the relay connection switching, the remote UE determines to use the model A. Alternatively, the remote UE may randomly select the model A or the model B.

S1413: The remote UE establishes the second relay connection to the second relay UE by using the first PC5 connection mechanism.

It may be understood that for a specific implementation principle of S1413, refer to related descriptions of S1113. Details are not described again.

It may be further understood that in some other scenarios, when the first relay connection needs to be switched, the remote UE may establish the second relay connection to the second relay UE by using the first PC5 connection mechanism, and preferentially use the first access mechanism. In this case, a relay service identifier list may include at least one relay service identifier, and each relay service identifier may indicate the first PC5 connection mechanism and one corresponding PC5 access mechanism in at least one access mechanism. Priority information of the relay service identifier may indicate a priority of the at least one relay service identifier, namely, a use priority of the at least one access mechanism. For a specific implementation principle of the scenario, refer to related descriptions of the scenario 2 and the scenario 3. Details are not described again.

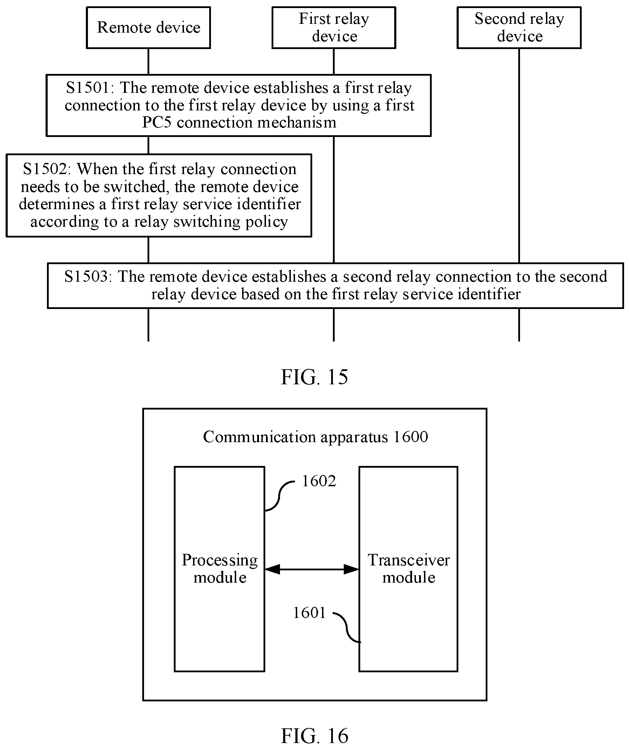

With reference to FIG. 13 and FIG. 14, the foregoing describes in detail specific procedures for the communication method provided in embodiments of this application in the scenario 3 and the scenario 4. The following specifically describes an overall procedure for the communication method in the scenario 3 and the scenario 4 with reference to FIG. 15.

FIG. 15 is a schematic flowchart 6 of a communication method according to an embodiment of this application. The communication method is applicable to the foregoing communication system, and mainly relates to interaction between a remote device (for example, a remote UE), a first relay device (for example, a first relay UE), and a second relay device (for example, a second relay UE).

Specifically, as shown in FIG. 15, a procedure for the communication method is as follows:
S1501: The remote device establishes a first relay connection to the first relay device by using a first PCS connection mechanism.

The first PCS connection mechanism may include a mechanism for obtaining a relay connection key through a user plane of the network, namely, a user plane based mechanism, or a mechanism for obtaining a relay connection key through a control plane of the network, namely, a control plane based mechanism. The first relay connection may be used by the remote device to obtain a first service from a network through the first relay device. For example, the remote device may access the network through the first relay connection by using a first access mechanism in at least one access mechanism, to obtain the first service of the network. Optionally, the at least one access mechanism may include at least one of the following: a layer-2 access mechanism, a layer-3 with protocol access mechanism, or a layer-3 with non-protocol access mechanism, so that the remote device can flexibly access the network.

In addition, for a specific implementation principle of S1501, refer to related descriptions of S1301 and S1303. Details are not described again.

S1502: When the first relay connection needs to be switched, the remote device determines a first relay service identifier according to a relay switching policy.

The relay switching policy may indicate to establish a relay connection by using a connection mechanism used before relay connection switching, and the first relay service identifier may indicate the first PCS connection mechanism. For a specific implementation principle, refer to related descriptions of S1304 and S1307. Details are not described again. Optionally, the relay switching policy may further indicate to access the network by using an access mechanism used before the relay connection switching. In this case, the first relay service identifier further indicates the first access mechanism. For a specific implementation principle, refer to related descriptions of S1404 and S1407. Details are not described again.

S1503: The remote device establishes a second relay connection to the second relay device based on the first relay service identifier.

The second relay device may be a relay device that supports the first PC5 connection mechanism, namely, a relay device corresponding to a relay service identifier indicating the first PCS connection mechanism. The second relay connection may be used by the remote device to obtain the first service of the network through the second relay device.

Manner 3: The relay connection is to be established by using the connection mechanism used before the relay connection switching.

The remote device may determine, based on the first relay service identifier, to establish the relay connection to the second relay device by using the first PC5 connection mechanism, in other words, discover the second relay device that supports the first PCS connection mechanism, to ensure that the remote device can establish the second relay connection to the second relay device by using the first PC5 connection mechanism.

For example, the remote device may broadcast the first relay service identifier, to receive a relay service identifier of at least one relay device. The relay service identifier of the at least one relay device may include the relay service identifier indicating the first PC5 connection mechanism. The remote device may determine, based on the first relay service identifier, to establish the relay connection to the second relay device in the at least one relay device. The second relay device is the relay device corresponding to the relay service identifier indicating the first PCS connection mechanism.

For another example, the remote device receives a relay service identifier of at least one relay device. The relay service identifier of the at least one relay device may include the relay service identifier indicating the first PC5 connection mechanism. The remote device may determine, based on the first relay service identifier, to establish the relay connection to the second relay device in the at least one relay device. The second relay device is the relay device corresponding to the relay service identifier indicating the first PC5 connection mechanism.

It may be understood that for a specific implementation principle of the manner 3, refer to related descriptions of S1308 to S1313. Details are not described again.

Manner 4: The relay connection is to be established by using the connection mechanism used before the relay connection switching, and the network is to be accessed by using the access mechanism used before the relay connection switching.

The remote device may determine, based on the first relay service identifier, to establish the relay connection to the second relay device by using the first PC5 connection mechanism and access the network by using the first PC5 connection mechanism. In this way, the remote device may establish the second relay connection to the second relay device by using the first PCS connection mechanism, and access the network through the second relay device by using the first access mechanism. It can be learned that when the remote device has accessed the network by using the first access mechanism, if the remote device expects to switch the relay connection, the remote device may continue to access the network by continuing to reuse the access mechanism used before the relay connection switching, namely, the first access mechanism, to further ensure the service continuity.

For example, the remote device may broadcast the first relay service identifier, to receive a relay service identifier of at least one relay device, where the relay service identifier of the at least one relay device may include a relay service identifier indicating the first PCS connection mechanism and the first access mechanism. The remote device may determine, based on the first relay service identifier, to establish the relay connection to the second relay device in the at least one relay device and access the network by using the first PC5 connection mechanism. The second relay device is a relay device corresponding to the relay service identifier indicating the first PCS connection mechanism.

For another example, the remote device may receive a relay service identifier of at least one relay device, where the relay service identifier of the at least one relay device may include a relay service identifier indicating the first PCS connection mechanism and the first access mechanism. The remote device may determine, based on the first relay service identifier, to establish the relay connection to the second relay device in the at least one relay device and access the network by using the first PC5 connection mechanism. The second relay device is a relay device corresponding to the relay service identifier indicating the first PCS connection mechanism.

It may be understood that for a specific implementation principle of the manner 4, refer to related descriptions of S1408 to S1413. Details are not described again.

In conclusion, when the remote device has established the first relay connection to the first relay device by using the first PCS connection mechanism, for example, the user plane based mechanism or the control plane based mechanism, if the remote device expects to switch the relay connection, the remote device may establish the second relay connection to the second relay device by continuing to reuse the connection mechanism used before the relay connection switching, namely, the first PC5 connection mechanism, to improve PC5 connection switching efficiency, reduce a switching delay, and ensure continuity of the first service obtained by the remote device from the network.

In a possible design solution, with reference to the foregoing manner 3, the remote device may determine the relay switching policy based on fifth indication information from a policy control network element. The fifth indication information may indicate to establish the relay connection by using the connection mechanism used before the relay connection switching. In other words, in addition to establishing the relay connection by using, by default, the connection mechanism used before the relay connection switching, the remote device may alternatively flexibly determine, based on the indication of the policy control network element, whether to establish the relay connection by using the connection mechanism used before the relay connection switching, to meet relay switching requirements of different services.

Alternatively, the remote device may determine the relay switching policy based on the first access mechanism. The first access mechanism is a mechanism used by the remote device to access the network through the first relay device. Optionally, the first access mechanism may be either of the following mechanisms: the layer-2 access mechanism and the layer-3 with non-protocol access mechanism. It may be understood that when the remote device accesses the network by using the layer-2 access mechanism or the layer-3 with non-protocol access mechanism, the remote device may establish a session between the remote device and the network, to obtain the first service from the network. In this case, if the remote device implements fast switching by reusing the connection mechanism used before the relay connection switching, the remote device may further continue to reuse the session before the session becomes invalid, to continue to obtain the first service from the network. This can ensure the service continuity.

It may be understood that for a specific implementation principle of the design solution, refer to related descriptions of S 1302, S 1305, and S1306. Details are not described again.

In a possible design solution, with reference to the foregoing manner 4, the remote device may determine the relay switching policy based on sixth indication information from a policy control network element. The sixth indication information indicates to establish the relay connection by using the connection mechanism used before the relay connection switching, and access the network by using the access mechanism used before the relay connection switching. In other words, the remote device may flexibly determine, based on the indication of the policy control network element, whether to establish the relay connection by using the connection mechanism used before the relay connection switching and whether to establish and access the network by using the access mechanism used before the relay connection switching, to meet relay switching requirements of different services.

Alternatively, the remote device may determine the relay switching policy based on the first access mechanism. For example, the first access mechanism is either of the following mechanisms: the layer-2 access mechanism and the layer-3 with non-protocol access mechanism. Optionally, the at least one access mechanism includes at least one of the following: the layer-2 access mechanism, the layer-3 with protocol access mechanism, or the layer-3 with non-protocol access mechanism.

It may be understood that for a specific implementation principle of the design solution, refer to related descriptions of S1402, S 1405, and S 1406. Details are not described again.

It may be understood that the procedure shown in FIG. 15 mainly describes the following process: The remote device first establishes the first relay connection to the first relay device, and then switches to establishing the second relay connection to the second relay device. This process may also be understood as follows: The remote device switches from a state of establishing the relay connection to the first relay device to a state of establishing the relay connection to the second relay device, in other words, the remote device switches from a state of being connected to the first relay device to a state of being connected to the second relay device.

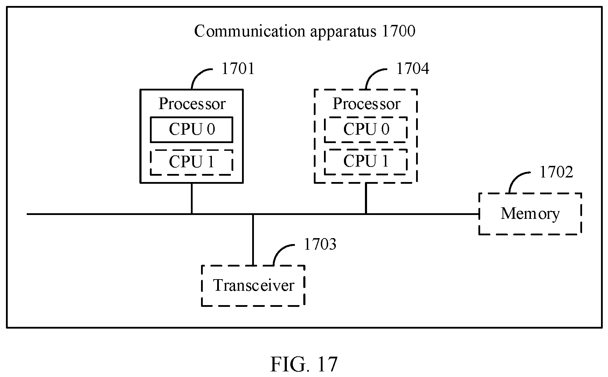

With reference to FIG. 10 to FIG. 15, the foregoing describes in detail the communication method provided in embodiments of this application. With reference to FIG. 16 and FIG. 17, the following describes in detail a communication apparatus configured to perform the communication method provided in embodiments of this application.

FIG. 16 is a diagram 1 of a structure of a communication apparatus according to an embodiment of this application. For example, as shown in FIG. 16, the communication apparatus 1600 includes a transceiver module 1601 and a processing module 1602. For ease of description, FIG. 16 shows only main components of the communication apparatus.

In some embodiments, the communication apparatus 1600 may be used in the communication system shown in FIG. 9, and perform functions of the remote UE or the remote device in the methods shown in FIG. 10 to FIG. 12.

For example, when a first relay connection needs to be switched, the processing module 1602 is configured to determine priority information of a first relay service identifier, to control, based on the priority information of the first relay service identifier, the transceiver module 1601 to establish a second relay connection to a second relay device by using a first PC5 connection mechanism. The priority information of the first relay service identifier indicates that the first PCS connection mechanism indicated by the first relay service identifier needs to be preferentially used. The first PCS connection mechanism is a mechanism used by the communication apparatus 1600 to establish the first relay connection to a first relay device. The first relay connection is used by the communication apparatus 1600 to obtain a first service of a network through the first relay device. The second relay connection is used by the communication apparatus 1600 to obtain the first service of the network through the second relay device.

In a possible design solution, the processing module 1602 is further configured to determine, based on the priority information of the first relay service identifier, to establish the relay connection to the second relay device by using the first PC5 connection mechanism, and control, by using the first PCS connection mechanism, the transceiver module 1601 to establish the second relay connection to the second relay device.

Optionally, the transceiver module 1601 is further configured to broadcast the first relay service identifier, to receive a relay service identifier of at least one relay device, where the relay service identifier of the at least one relay device includes a relay service identifier indicating the first PCS connection mechanism. In this way, the processing module 1602 is further configured to determine, based on the priority information of the first relay service identifier, to establish the relay connection to the second relay device in the at least one relay device by using the first PCS connection mechanism. The second relay device is a relay device corresponding to the relay service identifier indicating the first PC5 connection mechanism.

Alternatively, optionally, the transceiver module 1601 is further configured to receive a relay service identifier of at least one relay device, where the relay service identifier of the at least one relay device includes a relay service identifier indicating the first PCS connection mechanism. In this way, the processing module 1602 is further configured to determine, based on the priority information of the first relay service identifier, to establish the relay connection to the second relay device in the at least one relay device by using the first PCS connection mechanism. The second relay device is a relay device corresponding to the relay service identifier indicating the first PC5 connection mechanism.

In a possible design solution, the processing module 1602 is further configured to determine the priority information of the first relay service identifier based on first indication information from a policy control network element, where the first indication information indicates to establish the relay connection by preferentially using a connection mechanism used before relay connection switching.

In a possible design solution, the processing module 1602 is further configured to determine the priority information of the first relay service identifier based on second indication information from a relay server, where the second indication information indicates to establish the relay connection by preferentially using the first PC5 connection mechanism.

Optionally, the transceiver module 1601 is further configured to send a relay reselection request message to the relay server, where the relay reselection request message indicates that a connection mechanism used before relay connection switching is the first PC5 connection mechanism. The transceiver module 1601 is further configured to receive a relay reselection response message returned by the relay server for the relay reselection request message, where the relay reselection response message carries the second indication information.

In a possible design solution, the processing module 1602 is further configured to determine the priority information of the first relay service identifier based on a first access mechanism. The first access mechanism is a mechanism used by the communication apparatus 1600 to access the network through the first relay device. For example, the first access mechanism may be either of the following mechanisms: a layer-2 access mechanism and a layer-3 with non-protocol access mechanism.

In a possible design solution, the priority information of the first relay service identifier further indicates that a first access mechanism in at least one access mechanism for network access needs to be preferentially used, and the first access mechanism is a mechanism used by the communication apparatus 1600 to access the network through the first relay device. The processing module 1602 is further configured to determine, based on the priority information of the first relay service identifier, to establish the relay connection to the second relay device by using the first PCS connection mechanism and access the network by using the first access mechanism. In this way, the processing module 1602 is further configured to: control, by using the first PCS connection mechanism, the transceiver module 1601 to establish the second relay connection to the second relay device, and access the network through the second relay device by using the first access mechanism.

Optionally, the transceiver module 1601 is further configured to broadcast the first relay service identifier, to receive a relay service identifier of at least one relay device. The relay service identifier of the at least one relay device includes a relay service identifier indicating the first PCS connection mechanism and the first access mechanism. In this way, the processing module 1602 is further configured to determine, based on the priority information of the first relay service identifier, to establish the relay connection to the second relay device in the at least one relay device by using the first PC5 connection mechanism and access the network by using the first access mechanism.

Optionally, the transceiver module 1601 is further configured to receive a relay service identifier of at least one relay device. The relay service identifier of the at least one relay device includes a relay service identifier indicating the first PC5 connection mechanism and the first access mechanism. In this way, the processing module 1602 is further configured to determine, based on the priority information of the first relay service identifier, to establish the relay connection to the second relay device in the at least one relay device by using the first PCS connection mechanism and access the network by using the first access mechanism. The second relay device is a relay device corresponding to the relay service identifier indicating the first PCS connection mechanism and the first access mechanism.

Optionally, the processing module 1602 is further configured to determine the priority information of the first relay service identifier based on third indication information from a policy control network element. The third indication information indicates to establish the relay connection by preferentially using a connection mechanism used before relay connection switching, and access the network by preferentially using an access mechanism used before the relay connection switching.

Optionally, the processing module 1602 is further configured to determine the priority information of the first relay service identifier based on fourth indication information from a relay server. The fourth indication information indicates to establish the relay connection by preferentially using the first PC5 connection mechanism, and access the network by preferentially using the first access mechanism.

Further, the transceiver module 1601 is configured to send a relay reselection request message to the relay server. The relay reselection request message indicates that a connection mechanism used before relay connection switching is the first PCS connection mechanism, and an access mechanism used before the relay connection switching is the first access mechanism. The transceiver module 1601 is further configured to receive a relay reselection response message returned by the relay server for the relay reselection request message, where the relay reselection response message carries the fourth indication information.

Optionally, the processing module 1602 is further configured to determine the priority information of the first relay service identifier based on the first access mechanism. For example, the first access mechanism is either of the following mechanisms: a layer-2 access mechanism and a layer-3 with non-protocol access mechanism.

Optionally, the at least one access mechanism includes at least one of the following: the layer-2 access mechanism, a layer-3 with protocol access mechanism, or the layer-3 with non-protocol access mechanism.

In a possible design solution, the first PCS connection mechanism includes a mechanism for obtaining a relay connection key through a user plane of the network or a mechanism for obtaining a relay connection key through a control plane of the network.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform the functions of the remote UE or the remote device in the methods shown in FIG. 10 to FIG. 12 in the foregoing methods.

It may be understood that the communication apparatus 1600 may be a terminal, for example, the remote UE or the remote device, may be a chip (system) or another part or component that may be disposed in the terminal, or may be an apparatus including the terminal. This is not limited in this application.

In addition, for technical effects of the communication apparatus 1600, refer to the technical effects of the communication methods shown in FIG. 10 to FIG. 12. Details are not described herein again.

In some embodiments, the communication apparatus 1600 may be used in the communication system shown in FIG. 9, and perform functions of the remote UE or the remote device in the methods shown in FIG. 13 to FIG. 15.

For example, when a first relay connection needs to be switched, the processing module 1602 is configured to determine a first relay service identifier according to a relay switching policy, to control, based on the first relay service identifier, the transceiver module 1601 to establish a second relay connection to a second relay device by using a first PCS connection mechanism. The relay switching policy indicates to establish the relay connection by using a connection mechanism used before relay connection switching, the first relay service identifier indicates the first PCS connection mechanism, the first PC5 connection mechanism is a mechanism used by the remote device to establish the first relay connection to a first relay device, and the first relay connection is used by the remote device to obtain a first service of a network through the first relay device. The second relay connection is used by the remote device to obtain the first service of the network through the second relay device.

In a possible design solution, the processing module 1602 is further configured to determine, based on the first relay service identifier, to establish the relay connection to the second relay device by using the first PCS connection mechanism. The processing module 1602 is further configured to control, by using the first PC5 connection mechanism, the transceiver module 1601 to establish the second relay connection to the second relay device.

Optionally, the transceiver module 1601 is further configured to broadcast the first relay service identifier, to receive a relay service identifier of at least one relay device. The relay service identifier of the at least one relay device includes a relay service identifier indicating the first PCS connection mechanism. The processing module 1602 is further configured to determine, based on the first relay service identifier, to establish the relay connection to the second relay device in the at least one relay device. The second relay device is a relay device corresponding to the relay service identifier indicating the first PC5 connection mechanism.

Optionally, the transceiver module 1601 is further configured to receive a relay service identifier of at least one relay device. The relay service identifier of the at least one relay device includes a relay service identifier indicating the first PC5 connection mechanism. The processing module 1602 is further configured to determine, based on the first relay service identifier, to establish the relay connection to the second relay device in the at least one relay device. The second relay device is a relay device corresponding to the relay service identifier indicating the first PCS connection mechanism.

In a possible design solution, the processing module 1602 is further configured to determine the relay switching policy based on fifth indication information from a policy control network element. The fifth indication information indicates to establish the relay connection by using the connection mechanism used before the relay connection switching.

In a possible design solution, the processing module 1602 is further configured to determine the relay switching policy based on the first access mechanism. The first access mechanism is a mechanism used by the remote device to access the network through the first relay device. Optionally, the first access mechanism may be either of the following mechanisms: a layer-2 access mechanism and a layer-3 with non-protocol access mechanism.

In a possible design solution, the relay switching policy further indicates to access the network by using an access mechanism used before the relay connection switching, and the first relay service identifier further indicates a first access mechanism. The processing module 1602 is further configured to determine, based on the first relay service identifier, to establish the relay connection to the second relay device by using the first PC5 connection mechanism and access the network by using the first PC5 connection mechanism. In this way, the processing module 1602 is further configured to: control, by using the first PCS connection mechanism, the transceiver module 1601 to establish the second relay connection to the second relay device, and access the network through the second relay device by using the first access mechanism.

Optionally, the transceiver module 1601 is further configured to broadcast the first relay service identifier, to receive a relay service identifier of at least one relay device, where the relay service identifier of the at least one relay device includes a relay service identifier indicating the first PCS connection mechanism and the first access mechanism. The processing module 1602 is further configured to determine, based on the first relay service identifier, to establish the relay connection to the second relay device in the at least one relay device and access the network by using the first PC5 connection mechanism. The second relay device is a relay device corresponding to the relay service identifier indicating the first PC5 connection mechanism.

Optionally, the transceiver module 1601 is further configured to receive a relay service identifier of at least one relay device, where the relay service identifier of the at least one relay device includes a relay service identifier indicating the first PC5 connection mechanism and the first access mechanism. The processing module 1602 is further configured to determine, based on the first relay service identifier, to establish the relay connection to the second relay device in the at least one relay device and access the network by using the first PCS connection mechanism. The second relay device is a relay device corresponding to the relay service identifier indicating the first PCS connection mechanism.

Optionally, the processing module 1602 is further configured to determine the relay switching policy based on sixth indication information from a policy control network element. The sixth indication information indicates to establish the relay connection by using the connection mechanism used before the relay connection switching, and access the network by using the access mechanism used before the relay connection switching.

Optionally, the processing module 1602 is further configured to determine the relay switching policy based on the first access mechanism. For example, the first access mechanism is either of the following mechanisms: a layer-2 access mechanism and a layer-3 with non-protocol access mechanism.

Optionally, at least one access mechanism includes at least one of the following: the layer-2 access mechanism, a layer-3 with protocol access mechanism, or the layer-3 with non-protocol access mechanism.

In a possible design solution, the first PCS connection mechanism includes a mechanism for obtaining a relay connection key through a user plane of the network or a mechanism for obtaining a relay connection key through a control plane of the network.

Optionally, the transceiver module 1601 may include a sending module (not shown in FIG. 16) and a receiving module (not shown in FIG. 16). The sending module is configured to implement a sending function of the communication apparatus 1600, and the receiving module is configured to implement a receiving function of the communication apparatus 1600.

Optionally, the communication apparatus 1600 may further include a storage module (not shown in FIG. 16), and the storage module stores a program or instructions. When the processing module 1602 executes the program or the instructions, the communication apparatus 1600 is enabled to perform the functions of the remote UE or the remote device in the methods shown in FIG. 13 to FIG. 15 in the foregoing methods.

It may be understood that the communication apparatus 1600 may be a terminal, for example, the remote UE or the remote device, may be a chip (system) or another part or component that may be disposed in the terminal, or may be an apparatus including the terminal. This is not limited in this application.

In addition, for technical effects of the communication apparatus 1600, refer to the technical effects of the communication methods shown in FIG. 13 to FIG. 15. Details are not described herein again.

FIG. 17 is a diagram 2 of a structure of a communication apparatus according to an embodiment of this application. For example, the communication apparatus may be a terminal, or may be a chip (system) or another part or component that may be disposed in the terminal. As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each component of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing units, CPUs), may be an application-specific integrated circuit (application-specific integrated circuit, ASIC), or may be configured as one or more integrated circuits that implement embodiments of this application, for example, one or more digital signal processors (digital signal processors, DSPs), or one or more field programmable gate arrays (field programmable gate arrays, FPGAs).

Optionally, the processor 1701 may run or execute a software program stored in the memory 1702 and invoke data stored in the memory 1702, to perform various functions of the communication apparatus 1700, for example, perform the communication methods shown in FIG. 10 to FIG. 15.

During specific implementation, in an embodiment, the processor 1701 may include one or more CPUs, for example, a CPU 0 and a CPU 1 shown in FIG. 17.

During specific implementation, in an embodiment, the communication apparatus 1700 may alternatively include a plurality of processors, for example, the processor 1701 and a processor 1704 shown in FIG. 17. Each of the processors may be a single-core (single-CPU) processor or may be a multi-core (multi-CPU) processor. The processor herein may be one or more devices, circuits, and/or processing cores configured to process data (for example, computer program instructions).

The memory 1702 is configured to store a software program for executing the solutions of this application, and the processor 1701 controls the execution. For a specific implementation, refer to the foregoing method embodiments. Details are not described herein again.

Optionally, the memory 1702 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction structure or a data structure and that is accessible to a computer, but is not limited thereto. The memory 1702 may be integrated with the processor 1701; or may exist independently, and is coupled to the processor 1701 through an interface circuit (not shown in FIG. 17) of the communication apparatus 1700. This is not specifically limited in this embodiment of this application.

The transceiver 1703 is configured to communicate with another communication apparatus. For example, the communication apparatus 1700 is the terminal, and the transceiver 1703 may be configured to communicate with a network device or another terminal device. For another example, the communication apparatus 1700 is a network device, and the transceiver 1703 may be configured to communicate with a terminal or another network device.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701; or may exist independently, and is coupled to the processor 1701 through an interface circuit (not shown in FIG. 17) of the communication apparatus 1700. This is not specifically limited in this embodiment of this application.

It may be understood that the structure of the communication apparatus 1700 shown in FIG. 17 does not constitute a limitation on the communication apparatus. An actual communication apparatus may include more or fewer components than those shown in the figure, combine some components, or have different component arrangement.

In addition, for technical effects of the communication apparatus 1700, refer to the technical effects of the methods in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists. A and B may be singular or plural. In addition, the character "/" in this specification usually indicates an "or" relationship between associated objects, but may alternatively indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a remote device, a first relay service identifier according to a relay switching policy when a first relay connection needs to be switched, wherein the relay switching policy is establishing a relay connection by using a PC5 connection mechanism used before relay connection switching, the first relay service identifier is for determining a first PCS connection mechanism, the first PCS connection mechanism is a mechanism used by the remote device to establish the first relay connection to a first relay device, and the first relay connection is used by the remote device to obtain a first service of a network through the first relay device; and
establishing, by the remote device, a second relay connection to a second relay device based on the first relay service identifier and by using the first PC5 connection mechanism, wherein the second relay connection is used by the remote device to obtain the first service of the network through the second relay device.

2. The method according to claim 1, wherein the establishing, by the remote device, a second relay connection to a second relay device based on the first relay service identifier and by using the first PCS connection mechanism comprises:
determining, by the remote device based on the first relay service identifier, to establish the relay connection to the second relay device by using the first PCS connection mechanism.

3. The method according to claim 2, wherein the determining, by the remote device based on the first relay service identifier, to establish the relay connection to the second relay device by using the first PCS connection mechanism comprises:
broadcasting, by the remote device, the first relay service identifier;
receiving, by the remote device, a relay service identifier of at least one relay device, wherein the relay service identifier of the at least one relay device comprises a relay service identifier indicating the first PCS connection mechanism; and
determining, by the remote device based on the first relay service identifier, to establish the relay connection to the second relay device in the at least one relay device, wherein the second relay device is a relay device corresponding to the relay service identifier indicating the first PCS connection mechanism.

4. The method according to claim 2, wherein the determining, by the remote device based on the first relay service identifier, to establish the relay connection to the second relay device by using the first PCS connection mechanism comprises:
receiving, by the remote device, a relay service identifier of at least one relay device, wherein the relay service identifier of the at least one relay device comprises a relay service identifier indicating the first PCS connection mechanism; and
determining, by the remote device based on the first relay service identifier, to establish the relay connection to the second relay device in the at least one relay device, wherein the second relay device is a relay device corresponding to the relay service identifier indicating the first PCS connection mechanism.

5. The method according to any one of claims 2 to 4, wherein the method further comprises:
determining, by the remote device, the relay switching policy based on fifth indication information from a policy control network element, wherein the fifth indication information indicates to establish the relay connection by using the connection mechanism used before the relay connection switching.

6. The method according to any one of claims 2 to 5, wherein the method further comprises:
determining, by the remote device, the relay switching policy based on a first access mechanism, wherein the first access mechanism is a mechanism used by the remote device to access the network through the first relay device.

7. The method according to claim 6, wherein the first access mechanism is either of the following mechanisms: a layer-2 access mechanism and a layer-3 with non-protocol access mechanism.

8. The method according to claim 1, wherein the relay switching policy further indicates to access the network by using an access mechanism used before the relay connection switching, the first relay service identifier further indicates a first access mechanism, and the first access mechanism is a mechanism used by the remote device to access the network through the first relay device; and
the establishing, by the remote device, a second relay connection to a second relay device based on the first relay service identifier and by using the first PC5 connection mechanism comprises:
determining, by the remote device based on the first relay service identifier, to establish the relay connection to the second relay device by using the first PC5 connection mechanism and access the network by using the first PCS connection mechanism.

9. The method according to claim 8, wherein the determining, by the remote device based on the first relay service identifier, to establish the relay connection to the second relay device by using the first PC5 connection mechanism and access the network by using the first PCS connection mechanism comprises:
broadcasting, by the remote device, the first relay service identifier;
receiving, by the remote device, a relay service identifier of at least one relay device, wherein the relay service identifier of the at least one relay device comprises a relay service identifier indicating the first PCS connection mechanism and the first access mechanism; and
determining, by the remote device based on the first relay service identifier, to establish the relay connection to the second relay device in the at least one relay device and access the network by using the first PCS connection mechanism, wherein the second relay device is a relay device corresponding to the relay service identifier indicating the first PC5 connection mechanism.

10. The method according to claim 8, wherein the determining, by the remote device based on the first relay service identifier, to establish the relay connection to the second relay device by using the first PC5 connection mechanism and access the network by using the first PCS connection mechanism comprises:
receiving, by the remote device, a relay service identifier of at least one relay device, wherein the relay service identifier of the at least one relay device comprises a relay service identifier indicating the first PCS connection mechanism and the first access mechanism; and
determining, by the remote device based on the first relay service identifier, to establish the relay connection to the second relay device in the at least one relay device and access the network by using the first PCS connection mechanism, wherein the second relay device is a relay device corresponding to the relay service identifier indicating the first PC5 connection mechanism.

11. The method according to any one of claims 8 to 10, wherein the method further comprises:
determining, by the remote device, the relay switching policy based on sixth indication information from a policy control network element, wherein the sixth indication information indicates to establish the relay connection by using the connection mechanism used before the relay connection switching, and access the network by using the access mechanism used before the relay connection switching.

12. The method according to any one of claims 8 to 10, wherein the method further comprises:
determining, by the remote device, the relay switching policy based on the first access mechanism.

13. The method according to claim 12, wherein the first access mechanism is either of the following mechanisms: a layer-2 access mechanism and a layer-3 with non-protocol access mechanism.

14. The method according to any one of claims 1 to 13, wherein the first PC5 connection mechanism comprises at least one of: a mechanism for obtaining a relay connection key through a user plane of the network or a mechanism for obtaining a relay connection key through a control plane of the network.

15. A communication method, wherein the method comprises:
determining, by a remote device, priority information of a first relay service identifier when a first relay connection needs to be switched, wherein the priority information indicates that a first PCS connection mechanism indicated by the first relay service identifier needs to be preferentially used, the first PC5 connection mechanism is a mechanism used by the remote device to establish the first relay connection to a first relay device, and the first relay connection is used by the remote device to obtain a first service from a network through the first relay device; and
establishing, by the remote device, a second relay connection to a second relay device based on the priority information and by using the first PC5 connection mechanism, wherein the second relay connection is used by the remote device to obtain the first service of the network through the second relay device.

16. The method according to claim 15, wherein the establishing, by the remote device, a second relay connection to a second relay device based on the priority information and by using the first PCS connection mechanism comprises:
determining, by the remote device based on the priority information, to establish the relay connection to the second relay device by using the first PC5 connection mechanism; and
establishing, by the remote device, the second relay connection to the second relay device by using the first PC5 connection mechanism.

17. The method according to claim 16, wherein the determining, by the remote device based on the priority information, to establish the relay connection to the second relay device by using the first PCS connection mechanism comprises:
broadcasting, by the remote device, the first relay service identifier;
receiving, by the remote device, a relay service identifier from at least one relay device, wherein the relay service identifier of the at least one relay device comprises a relay service identifier indicating the first PC5 connection mechanism; and
determining, by the remote device based on the priority information, to establish the relay connection to the second relay device in the at least one relay device by using the first PCS connection mechanism, wherein the second relay device is a relay device corresponding to the relay service identifier indicating the first PC5 connection mechanism.

18. The method according to claim 16, wherein the determining, by the remote device based on the priority information, to establish the relay connection to the second relay device by using the first PCS connection mechanism comprises:
receiving, by the remote device, a relay service identifier from at least one relay device, wherein the relay service identifier of the at least one relay device comprises a relay service identifier indicating the first PC5 connection mechanism; and
determining, by the remote device based on the priority information, to establish the relay connection to the second relay device in the at least one relay device by using the first PCS connection mechanism, wherein the second relay device is a relay device corresponding to the relay service identifier indicating the first PCS connection mechanism.

19. The method according to any one of claims 15 to 18, wherein the determining, by a remote device, priority information of a first relay service identifier comprises:
determining, by the remote device, the priority information based on first indication information from a policy control network element, wherein the first indication information indicates to establish the relay connection by preferentially using a connection mechanism used before relay connection switching.

20. The method according to any one of claims 15 to 18, wherein the determining, by a remote device, priority information of a first relay service identifier comprises:
determining, by the remote device, the priority information based on second indication information from a relay server, wherein the second indication information indicates to establish the relay connection by preferentially using the first PCS connection mechanism.

21. The method according to claim 20, wherein the method further comprises:
sending, by the remote device, a relay reselection request message to the relay server, wherein the relay reselection request message indicates that a connection mechanism used before relay connection switching is the first PCS connection mechanism; and
receiving, by the remote device, a relay reselection response message returned by the relay server for the relay reselection request message, wherein the relay reselection response message carries the second indication information.

22. The method according to any one of claims 15 to 18, wherein the determining, by a remote device, priority information of a first relay service identifier comprises:
determining, by the remote device, the priority information based on a first access mechanism, wherein the first access mechanism is a mechanism used by the remote device to access the network through the first relay device.

23. The method according to claim 22, wherein the first access mechanism is either of the following mechanisms: a layer-2 access mechanism and a layer-3 with non-protocol access mechanism.

24. The method according to claim 15, wherein the priority information further indicates that a first access mechanism in at least one access mechanism for network access needs to be preferentially used, the first access mechanism is a mechanism used by the remote device to access the network through the first relay device, and the establishing, by the remote device, a second relay connection to a second relay device based on the priority information and by using the first PCS connection mechanism comprises:
determining, by the remote device based on the priority information, to establish the relay connection to the second relay device by using the first PC5 connection mechanism and access the network by using the first access mechanism; and
establishing, by the remote device, the second relay connection to the second relay device by using the first PC5 connection mechanism; and
the method further comprises:
accessing, by the remote device, the network through the second relay device by using the first access mechanism.

25. The method according to claim 24, wherein the determining, by the remote device based on the priority information, to establish the relay connection to the second relay device by using the first PC5 connection mechanism and access the network by using the first access mechanism comprises:
broadcasting, by the remote device, the first relay service identifier;
receiving, by the remote device, a relay service identifier of at least one relay device, wherein the relay service identifier of the at least one relay device comprises a relay service identifier indicating the first PCS connection mechanism and the first access mechanism; and
determining, by the remote device based on the priority information, to establish the relay connection to the second relay device in the at least one relay device by using the first PCS connection mechanism and access the network by using the first access mechanism, wherein the second relay device is a relay device corresponding to the relay service identifier indicating the first PC5 connection mechanism and the first access mechanism.

26. The method according to claim 24, wherein the determining, by the remote device based on the priority information, to establish the relay connection to the second relay device by using the first PC5 connection mechanism and access the network by using the first access mechanism comprises:
receiving, by the remote device, a relay service identifier of at least one relay device, wherein the relay service identifier of the at least one relay device comprises a relay service identifier indicating the first PCS connection mechanism and the first access mechanism; and
determining, by the remote device based on the priority information, to establish the relay connection to the second relay device in the at least one relay device by using the first PCS connection mechanism and access the network by using the first access mechanism, wherein the second relay device is a relay device corresponding to the relay service identifier indicating the first PC5 connection mechanism and the first access mechanism.

27. The method according to any one of claims 24 to 26, wherein the determining, by a remote device, priority information of a first relay service identifier comprises:
determining, by the remote device, the priority information based on third indication information from a policy control network element, wherein the third indication information indicates to establish the relay connection by preferentially using a connection mechanism used before relay connection switching, and access the network by preferentially using an access mechanism used before the relay connection switching.

28. The method according to any one of claims 24 to 26, wherein the determining, by a remote device, priority information of a first relay service identifier comprises:
determining, by the remote device, the priority information based on fourth indication information from a relay server, wherein the fourth indication information indicates to establish the relay connection by preferentially using the first PCS connection mechanism and access the network by preferentially using the first access mechanism.

29. The method according to claim 28, wherein the method further comprises:
sending, by the remote device, a relay reselection request message to the relay server, wherein the relay reselection request message indicates that a connection mechanism used before relay connection switching is the first PCS connection mechanism, and an access mechanism used before the relay connection switching is the first access mechanism; and
receiving, by the remote device, a relay reselection response message returned by the relay server for the relay reselection request message, wherein the relay reselection response message carries the fourth indication information.

30. The method according to any one of claims 24 to 29, wherein the determining, by a remote device, priority information of a first relay service identifier comprises:
determining, by the remote device, the priority information based on the first access mechanism.

31. The method according to claim 30, wherein the first access mechanism is either of the following mechanisms: a layer-2 access mechanism and a layer-3 with non-protocol access mechanism.

32. The method according to any one of claims 14 to 31, wherein the at least one access mechanism comprises at least one of the following: the layer-2 access mechanism, a layer-3 with protocol access mechanism, or the layer-3 with non-protocol access mechanism.

33. The method according to any one of claims 15 to 32, wherein the first PC5 connection mechanism comprises a mechanism for obtaining a relay connection key through a user plane of the network or a mechanism for obtaining a relay connection key through a control plane of the network.

34. A communication apparatus, wherein the apparatus comprises a module configured to perform the method according to any one of claims 1 to 33.

35. A communication apparatus, wherein the communication apparatus comprises a processor and a memory, and the memory is configured to store computer instructions; and when the processor executes the instructions, the communication apparatus is enabled to perform the method according to any one of claims 1 to 33.

36. A computer-readable storage medium, wherein the computer-readable storage medium comprises a computer program or instructions; and when the computer program or the instructions are run on a computer, the computer is enabled to perform the method according to any one of claims 1 to 33.

37. A computer program product, comprising a computer program or instructions, wherein when the computer program or the instructions are run on a computer, the computer is enabled to perform the method according to any one of claims 1 to 33.
